# EUROPEAN PATENT SPECIFICATION

(11) **EP 1 916 906 B1**
(45) Date of publication and mention of the grant of the patent: **23.11.2016**
(21) Application number: 06802128.6
(22) Date of filing: 22.08.2006
(51) Int. Cl.: A23G 4/08, A23G 4/06

(54) **ENVIRONMENTALLY-FRIENDLY CHEWING HAVING REDUCED STICKINESS**
UMWELTFREUNDLICHES KAUMATERIAL MIT VERRINGERTER KLEBRIGKEIT
GOMME A MACHER SANS DANGER POUR L'ENVIRONNEMENT A ADHERENCE REDUITE

(30) Priority: 22.08.2005 US 710064 P; 18.11.2005 US 283331
(43) Date of publication of application: 07.05.2008
(73) Proprietor: Intercontinental Great Brands LLC, East Hanover, NJ 07936 (US)
(72) Inventor: MILADINOV, Vesselin, Danailov, Denville, NJ 07834 (US); AMARISTA, Jose, A., Morristown, NJ 07960 (US)
(74) Representative: Wilson Gunn
(86) International application number: PCT/US2006/032849
(87) International publication number: WO 2007/024903

(56) References cited:
- EP-A2- 0 134 120
- WO-A-96/08166
- US-A- 3 984 574
- US-A- 4 352 823
- US-A- 5 437 878

## Description

### FIELD OF THE INVENTION

The present invention also relates to chewing gum composition and products that exhibit reduced stickiness or non-stick properties during processing, storage, and/or after chewing. Moreover, the present invention further relates to chewing gum bases for use in such chewing gum compositions which contribute to the reduced and non-stick properties.

### BACKGROUND

Conventional chewing gum products are not "environmentally-friendly." They can maintain stickiness during and after chewing and adhere to the ground (as well as any other surface with which the gum product may come into contact) if care is not used with regard to disposal of the gum product. The stickiness of such conventional chewing gum products results in large part, from the use of elastomer solvents (i.e. resins) and other "tacky" ingredients (such as wax) during the manufacturing process. In particular, conventional chewing gums manufactured using elastomer solvents exhibit a continuous or substantially continuous phase when chewed. As the continuous phase is characterized by an amorphous elastomer matrix containing sticky elastomer solvents, the gum bolus that results upon chewing also is sticky.

Many elastomers, and particularly high molecular weight elastomers (e.g. 200,000 mw or greater), used in chewing gum compositions are usually solid at room temperature. They are usually purchased as blocks of solid material and generally require softening using solvents to be useful in chewing gum compositions. Softening elastomers in the absence of elastomer solvents is difficult, since the solid elastomer must still be processed into a continuous homogenous and flowable mass to be useful in chewing gum compositions.

Although gum products are manufactured without the use of elastomer solvents and/or other "tacky" ingredients have reportedly been developed, such gum products often rely on "non-conventional" gum ingredients to achieve desired properties. U.S. Patent No. 5,882,702, for example, obviates the need for elastomer solvents by replacing elastomers with a plasticized proteinaceous material such as zein. The incorporation of non-conventional ingredients in gum products, however, often compromises taste and thus can be undesirable from a consumer acceptability standpoint.

WO 96/08166 describes a wax-free adhesive chewing gum which uses a gum base devoid or substantially free of wax and elastomer plasticizer; US 4,352,823 describes a coextruded chewing gum which includes an extruded center portion surrounded by and bonded to an extruded outer shell portion, where the centre portion of the coextruded chewing gum is formed of a non-SBR gum, and the outer shell portion provides a protective layer or coating for the core portion to inhibit sweating and stickiness and allow for use of conventional wrapping machines; US 3,984,574 describes an inherently non-tacky chewing gum which does not adhere to dentures, fillings, or natural teeth; and US 5,437,878 describes chewing gum compositions exhibiting a reduced tendency to adhere undesirably to solid dental surfaces in the mouth, comprising a gum base which comprises about 8 to about 18 wt. % of low molecular polyisobutylene; about 1 to about 4 wt. % of high molecular weight polyisobutylene; about 16 to about 30 wt. % of polyvinyl acetate; about 16 to about 30 wt. % of inorganic filler; about 1 to about 6 wt. % of polyethylene; about 18 to about 30 wt. % of a fat component selected from the group consisting of hydrogenated and partially hydrogenated vegetable oils and mixtures thereof; about 1 to about 6 wt. % of emulsifier; and about 2 to about 10 wt. % of microcrystalline wax.

Moreover, although gum products that allegedly do not stick to teeth and oral prosthetics during mastication are reported (see e.g., U.S. Patent No. 4,518,615), there nevertheless remains a need for chewing gum products that also exhibit reduced stickiness or non-stick properties upon disposal of the gum product subsequent to chewing. In particular, there remains a need for environmentally-friendly chewing gum boluses that exhibit reduced stickiness to, or do not stick to, those surfaces where gum boluses that are improperly disposed of are often found (e.g., pavement, shoes, hair, undersides of tables and desks).

### SUMMARY OF THE INVENTION

There is therefore provided a chewing gum base composition comprising:
(i) at least one elastomer having a glass transition temperature prior to processing into a substantially homogenous mass; and
(ii) at least one non-stick inducing component which softens and permits processing of the elastomer into a substantially homogenous mass,
wherein the non-stick inducing component maintains the glass transition temperature of the elastomer within a three degree range upon admixture with the elastomer;
wherein the non-stick inducing component is present in an amount of 30% to 40% by weight of the chewing gum base composition;
wherein the elastomer has an average molecular weight of at least 200,000;
wherein the non-stick inducing component comprises a fat, including natural fats or animal fats, or
wherein the non-stick inducing component is selected from fatty acids; monoglycerides, diglycerides, and triglycerides of fatty acids; esters of monoglycerides and diglycerides; glycerol esters of fatty acids; fatty esters of sugars; esters of alcohols; phospholipids and combinations thereof;
wherein the non-stick inducing component has a property selected from having a hydrophilic portion and hydrophobic portion; an HLB of 3.5 to 13; and a melting point of 10°C to 75°C.; and
wherein the at least one non-stick inducing component comprises a first non-stick inducing component having a melting point of 60°C to 70°C and a second non-stick inducing component having a melting point of 20°C to 40°C.

In some embodiments there is provided a chewing gum composition including:
(i) a chewing gum base composition as defined above; and
(ii) at least one of a flavour and a sweetener.

In some embodiments, there is provided a method of making a chewing gum composition having reduced - stick properties, comprising:
(a) providing a chewing gum base composition as defined hereinabove; and
(b) combining said gum base with at least one component selected from sweeteners, flavors, and combinations thereof.

### BRIEF DESCRIPTION OF THE DRAWINGS

Figures 1A and 1B are photographs that illustrate how gum samples were applied to a brick and subjected to an adhesion test as described therein.
Figures 2 through 13 are photographs that illustrate the cud residues remaining on brick surfaces after force was applied to various gum samples to remove the gum samples from the brick in accordance with an adhesion test as described herein.
Figure 14 is a polarized light photomicrograph of a gum base containing only an elastomer and resin.
Figure 15 is a polarized light photomicrograph of a gum base containing only an elastomer and medium chain triglycerides.
Figures 16-19 are each polarized light photomicrographs of gum bases containing an elastomer and more than one non-stick inducing component of the present invention.
Figure 20 is a polarized light photomicrograph of a gum base containing an elastomer and one non-stick inducing component of the present invention.
Figure 21 is a photograph of the results of adhesion tests showing a brick surface subsequent to removal of polyisobutylene rubber-containing inventive chewing gums, one of which contained chlorophyll.
Figure 22 is a photograph of the results of adhesion tests showing a brick surface subsequent to removal of butyl rubber-containing inventive chewing gums, one of which contained chlorophyll.
Figure 23 is a photograph of the results of adhesion tests showing removal of styrene-butadiene rubber-containing inventive chewing gums, one of which contained chlorophyll.

### DETAILED DESCRIPTION

Some embodiments of the invention are directed to producing reduced-stick or non-stick gum base and reduced-stick or non-stick chewing gum compositions using such gum base. The reduced or non-stick properties are achieved by employing certain fats and/or oils which soften the elastomers in chewing gum without causing excess stickiness. Other embodiments of the invention relate to rendering chewing gum compositions biodegradable. Biodegradability is enhanced by incorporation of free-radical generators, such as photosensitizers.

As used herein the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum composition.

As used herein, the term "non stick inducing component(s)" refers to components that are incorporated in a gum composition such that the gum composition exhibits reduced stickiness as compared to the same gum composition in the absence of the non-stick inducing components. Desirably, the non-stick inducing components have a number of advantages, including facilitating the softening of solid elastomer components in the production of gum base as well as preventing or reducing the tendency of chewing gum compositions and products made therefrom from sticking to surfaces such as packages, teeth, oral prosthetics such as implants and dentures, as well as to concrete, stone, plastic, wood, pavement, brick glass and various other similar surfaces. The non-stick inducing components may cause the final (as defined herein) Tg of an elastomer used in a chewing gum composition to change no more than about three degrees (3°), up or down from the initial Tg (as defined herein) during processing. The non-stick inducing components also may serve as a release agent, as defined herein. Furthermore, the non-stick components may crystallize or form domain regions in the gum base elastomers. These non-stick inducing components may be used to replace some or all of the elastomer solvent materials, such as resin and waxes conventionally used in chewing gum compositions, The non-stick inducing components, when added to a gum base may also act as an elastomer processing aid to permit softening processing of the elastomer from a solid to a useful gum base material.

As used herein, the term "Tg" refers to the glass transition temperature of an elastomer used in chewing gum compositions as measured at any time before or after processing of the elastomer. More particularly, the term "Tg initial" refers to the glass transition temperature of an elastomer prior to processing of the elastomer into a substantially homogenous mass in the presence of a non-stick inducing component. The term "Tg final" refers to the glass transition temperature of an elastomer subsequent to processing of the elastomer into a softened mass useful for gum base.

Glass transition temperature (Tg) is generally understood to be the temperature below which molecules have very little mobility. On a larger scale, polymers are rigid and brittle below their glass transition temperature and can undergo plastic deformation above it. Tg is usually applicable to amorphous phases and is Commonly applicable to glasses, plastics and rubbers. In polymers, Tg is often expressed as the temperature at which the Gibbs free energy is such that the activation energy for the cooperative movement of a significant portion of the polymer is exceeded. This allows molecular chains to slide past each other when a force is applied.

The non-stick inducing components may contribute to one or more of the following advantages: (i) facilitate the process of converting a solid or solid-like elastomer into some other form, such as a homogenous or substantially homogenous softened or malleable mass; (ii) allow sufficient softening for processing and for use in a chewing gum product; and (iii) provide softening without an increase in stickiness of the final gum product. The non-stick inducing components, when used in the present invention may provide one or more of these advantages, as well as modulate the change in elastomer Tg during formation of the gum base. In some embodiments, when the non-stick inducing components are used to make a chewing gum base , the Tg of the elastomer used to make the gum base changes no more than about three degrees (3 °) up or down (plus/minus) as compared to the Tg of the elastomer prior to gum base processing. The maximum three degrees change (i.e., Tg final) includes a change either higher or lower than the Tg initial. For example, if the Tg initial of the elastomer is 60°C, the Tg final of the elastomer subsequent to the addition of the non-stick inducing component may be about 57°C to about 63°C, e.g., +/- 3°C. The term "non-stick inducing components" also includes, for example, any component that facilitates the process of converting solid or solid-like elastomers to a form useful for chewing during batch systems, continuous systems, and other manufacturing systems and/or processes known in the art. Desirably, the elastomer processing aid has a limited capability to plasticize polymers, as defined herein below.

As used herein, the phrase "release properties" means properties that allow a chewing gum base and/or chewing gum product to exhibit reduced adherence to a surface.

As used herein, the phrase "limited capability to plasticize polymers" means that a component will not change the Tg of a gum base more than about plus/minus three (+/- 3) degrees upon incorporation of the component into the gum base.

As used herein, the term "processing" refers to any step taken during the manufacture of a gum base and/or gum product, including any step that occurs when manufacturing a gum product by means of batch systems, continuous systems, or any other manufacturing system known in the art. As used herein, the term processing includes the process of "masticating an elastomer" so that it is suitable for inclusion in a chewing gum product.

In some embodiments of the invention, various chewing gum compositions and products made therefrom are provided with reduced stickiness or non-stick properties by the incorporation of non-stick inducing components which include various fats and oils. These non-stick inducing components may be used to partially or fully replace conventional components such as elastomer solvents and certain waxy materials, which are conventionally used to soften gum base elastomers such that they are processible for chewing gum compositions, but which are known to contribute to the stickiness of chewing gum compositions made therefrom. The incorporation of these non-stick inducing components have a number of advantages in the processing of gum base as well as contribute to the overall reduced stickiness in the final chewing gum compositions and products made therefrom.

In some embodiments, the non-stick inducing components, when added to the gum base, allow for softening in the gum base elastomers such that they can be easily processed from solid rubbers to soft matrices, which can then be incorporated into chewing gum compositions.

In some embodiments of the invention, the addition of the non-stick inducing components balances the softening of the gum base elastomer components, as well as the chewing gum composition as a whole, while reducing the overall stickiness of the products made therefrom.

In some embodiments, the elastomer components in chewing gum compositions, such as those used to form gum base, are softened through the incorporation of the non-stick inducing components without changing the glass transition temperature (Tg°C) of the elastomer more than three degrees above its initial Tg°C nor less than three degrees below the initial Tg°C, i.e., +/- three (3) degrees.

In other embodiments, the non-stick inducing components have been found to exhibit various physical properties including the ability to migrate to the surface of the chewing gum product to create a release barrier which reduces the ability of the chewing gum product to stick to surfaces. In some embodiments, the non-stick inducing components have hydrophobic and hydrophilic character, i.e., HLB values, which enhance the release barrier characteristics due to the tendency of these materials to molecularly orient themselves such that the hydrophobic portion orients itself inward of the chewing gum and the hydrophilic portion orients itself to the surface of the chewing gum, thereby contributing to the release properties and reducing the stickiness.

Non-stick inducing components may be present in the gum base prior to its use in a chewing gum composition, as well as being added to the chewing gum composition as a whole. In some embodiments, conventional components which contribute to stickiness, such as elastomer solvents, may be partially or fully replaced with the non-stick inducing components of the present invention. It has also been discovered, that the addition of a methyl ester liquid rosin, desirably in low amounts, may be advantageously employed to enhance softening without contributing to stickiness. It has been discovered that methyl ester liquid resins tend to be relatively small molecules which do not destroy emulsions which may be formed by the elastomer/non-stick inducing components.

In other embodiments of the invention, the chewing gum compositions may be rendered more environmentally friendly by the incorporation of additional components which enhance the degradation of the chewing gum, such that it looses its ability to maintain its cohesiveness and crumbles and breaks apart into smaller, discontinuous pieces over time. Components which contribute to the degradation include light absorbing materials which upon exposure to light, e.g. sunlight, react with the elastomer components and cause them to degrade, or otherwise become modified to become less sticky. In some embodiments, upon exposure to light, the molecular weight of the elastomer component is reduced sufficiently enough to render them and chewing gum compositions containing them less sticky. In some embodiments, there may be included components which when exposed to light cause an increase in the molecular weight of the elastomer components sufficient to reduce the stickiness of the elastomer, as well as reduce the stickiness of chewing gum compositions containing them.

As used herein, the phrase "non-conventional gum ingredients" refers to ingredients not conventionally included in chewing gum products and includes ingredients such as zein and seed oils from the plant genus Cuphea.

As used herein, the phrase "conventional gum ingredients" refers to ingredients traditionally included in gum products such as elastomers and elastomer solvents.

As used herein, the term "surface", when used in connection with non-stick properties, refers to any surface with which a chewing gum base, chewing gum composition, chewing gum product or chewing gum bolus comes into contact. Such surfaces include without limitation, for example, the following: any surface in the oral cavity such as the surface of a tooth or the surface of any dental or orthodontic device contained in the oral cavity; any surface on a human body including the skin, such as the skin on the face, and hair; and any surface external to a human body, such as the surface of pavements, sidewalks, roadways, brick, glass, wood, plastic, stone, furniture, carpeting, the soles of footwear including shoes or sneakers, cardboard, paper, metal, and surfaces of porous nature to which conventional gum ingredients stick and are difficult to remove.

The present invention provides numerous advantages over conventional chewing gum compositions by the incorporation of certain components which aid in the processing of the gum base, as well as contribute to certain advantages and properties in the final chewing gum compositions and products made therefrom. One such advantage is the reduced-stick and/or non-stick properties that are imparted to the gum base and consequently to the chewing gum compositions as a whole, both during the processing of the chewing gum base and subsequent to chewing. Another advantage is the ability to process elastomer gum base components without relying on conventional solvent additives, such as gum resins. Yet another advantage is the ability to substitute some or all of the elastomer solvent within a gum base with non-stick inducing components. In some embodiments, only a portion of an elastomer solvent is replaced to take advantage of the softening capabilities of the solvent without imparting stickiness to chewing gum compositions made therefrom.

Desirably, the non-stick inducing components(s) provide(s) a maximum change in glass transition temperature or an elastomer of about +/- 3° when brought into contact with an elastomer (e.g., by mixing) during manufacture of a chewing gum base.

In some embodiments, the chewing gum compositions of the present invention include a non-stick inducing component in an amount sufficient to migrate to the surface of a chewing gum product formed therefrom and provide a surface barrier. Desirably, the surface barrier has release properties such that a gum bolus formed upon chewing exhibits a reduced adherence to a variety of surfaces as compared to gum compositions and not containing the non-stick inducing component.

In some embodiments, the non-stick inducing components when added to gum bases form domain regions which indicate the crystallization of the non-stick components within an elastomer matrix. The non-stick inducing components may have limited miscibility in the elastomer at room temperature such that upon cooling of the gum base or chewing gum composition, a separate crystalline phase forms. In particular, in some embodiments of the invention, such domains can form upon cooling of the gum base during processing. Advantageously, chewing gum compositions incorporating gum bases containing such domains exhibit reduced stickiness to surfaces that are both internal and external to the mouth, as compared to gum bases not containing such domains. Moreover, when a gum base contains at least one domain and at least one elastomer, the at least one domain may be characterized by a particular Tg value and the at least one elastomer may be characterized by a different Tg value.

Accordingly, unlike conventional gum bases which have a continuous phase of a sticky elastomer matrix, the gum bases of the present invention may have a discontinuous phase that is separate and distinct from the elastomer matrix of the gum base. Gum bases of the present invention that contain a discontinuous phase exhibit reduced stickiness as compared to gum bases not having a discontinuous phase.

The discontinuous phase may be a result of one or more of the following: the formation of a release barrier on the surface of the gum base due to the incorporation of a non-stick inducing component therein,; the presence of domains; and the orientation of the non-stick inducing component such that the gum base surface has greater hydrophilic character.

The non-stick inducing component comprises a fat, including natural fats or animal fats; or is selected from fatty acids; monoglycerides, diglycerides and triglycerides of fatty acids; esters of monoglycerides and diglycerides; glycerol esters of fatty acides; fatty esters of sugars; esters of alcohols; phospholipids and combinations thereof.

The non-stick inducing component has a property selected from having a hydrophilic portion and a hydrophobic portion; an HLB (hydrophilic, lipophilic balance) range of 3.5 to 13 and a melting point of 10°C to 75°C, desirably from 20 °C to 73 °C and more desirably 40 °C and 70 °C. The non-stick inducing component may be selected from saturated and unsaturated fatty acids having a carbon chain length of C₁₄ to C₂₄; including for example saturated and unsaturated fatty acids such as stearic acid, oleic acid, palmitic acid, linoleic acid, arachidonic acid, myristic acid, palmitoleic acid and vaccenic acid; monoglycerides, diglycerides, and triglycerides of saturated and unsaturated fatty acids having a chain length of C₁₄ to C₂₄; natural fats containing predominantly triglycerides of saturated and unsaturated fatty acids having a chain length of C₁₄ to C₂₄, including hydrogenated and non-hydrogenated cottonseed oil, soybean oil, olive oil, grape seed oil, peanut oil, sunflower oil, safflower oil, palm oil, cocoa butter, coconut oil and palm kernel oil; esters of monoglycerides and diglycerides, such as acetylated monoglycerides and acetylated diglycerides and the glycerol esters of fatty acids including glycerol monostearate (GMS); animal fats such as beef tallow oil, lard, butter and chicken fat, fatty esters of sugars, esters of alcohols such as lower alkyl (C₁₋₄) stearates including methyl and ethyl sterates, as well as high molecular weight esters of alcohols; phospholipids such as lecithin and lanolin, and mixtures and combinations thereof.

Fatty acids and their esters having lengths of C₂-C₁₃ may also be employed in combination with the C₁₄-C₂₄ fatty acid esters described above but due to the tendency of the medium chain triglycerides (MCTs having a carbon chain length of C₆-C₁₂) to be more miscible or compatible with the elastomer, their presence must be balanced such that the Tg final as defined herein is maintained and/or separate crystals and/or domains are present or maintained in the elastomer matrix.

The ratio of non-stick inducing component to elastomer (non-stick: elastomer) may be in the range of 1:1 to 10:1 and desirably in the range of 4:1 to 8:1. When optional components such as elastomer solvents or waxes are employed along with the non-stick inducing component, the ratio of non-stick inducing component to elastomer solvent (non-stick solvent or wax) may be 1:0 to 4:1.

The at least one non-stick inducing component comprises a first non-stick inducing component having a melting point of 60°C to 70°C and a second non-stick inducing component having a melting point of 20°C to 40°C. More particularly, the present inventive gum bases may include at least one fat having a melting point of about 70°C and at least one fat having a melting point of about 40°C.

The non-stick inducing component may be present in amounts of 10% to 60% by weight of the chewing gum base. In some embodiments, the non-stick inducing component may be present in amounts of 20% to 50% by weight of the chewing gum base. In other embodiments, the non-stick inducing component may be present in amounts of 30% to 40% by weight of the chewing gum base.

The elastomers (rubbers) in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing-gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tuna, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Specific examples of elastomers include polyisobutylene, styrene butadiene rubber, butyl rubber and combinations thereof.

Additional useful polymers include; polybutylmethacrylate/acrylic acid copolymers, polyvinylacetate/vinylalcohol copolymers, microcrystalline celluylose, sodium carboxymethyl cellulose, hydroxylpropylmethyl cellulose, crosslinked cellulose acetate phthalate, crosslinked hydroxyl methyl cellulose polymers, zein, crosslinked polyvinyl pyrrolidone, polymethylmethacrylate/acrylic acid copolymers, copolymers of lactic acid, polyhydroxyalkanoates, plasticized ethylcellulose, polyvinyl acetatephthalate and combinations thereof.

The elastomer employed in the gum base has an average molecular weight of at least 200,000. Desirably, the elastomer employed in the gum base has an average molecular weight from 200,000 to 2,000,000.

It is particularly useful to include an elastomer composition including a predominant amount of a material selected from polyisobutylene, butyl rubber, butadiene-styrene rubber and combinations thereof, the elastomer composition having an average molecular weight of at least 200,000; and a mastication processing aid, wherein the addition of the non-stick inducing component maintains the glass transition temperature of the elastomer within a three degree (3°) range, i.e., +/- three degrees. By "predominant" is meant that the composition includes greater than about 50% to about 98% of a material selected from polyisobutylene, butyl rubber, butadiene-styrene rubber and combinations thereof.

The amount of elastomer employed in the gum base may vary depending upon various factors such as the type of gum base used, the consistency of the gum composition desired and the other components used in the composition to make the final chewing gum product. In general, the elastomer may be present in the gum base in an amount from 1% to 30% by weight of the gum base. Desirably, the elastomer is present in an amount from 2% to 15% by weight of the gum base. More desirably, the elastomer is present in the gum base in an amount from 3% to 10% by weight of the gum base.

In some embodiments, the chewing gum base may include a texture-modifier. In general, the texture-modifier has a molecular weight of at least about 2,000.

In some embodiments, the texture-modifier comprises a vinyl polymer. Suitable texture-modifiers include, for example, polyvinyl acetate, polyvinyl laurate acetate, polyvinyl alcohol or mixtures thereof.

Desirably, the texture-modifier is present in an amount from about 15% to about 70% by weight of the gum base. More desirably, the texture-modifier is present in an amount from about 20% to about 60% by weight of the gum base. Most desirably, the texture-modifier is present in an amount from about 30 % to about 45% by weight of the gum base.

In addition to the components set out above, the gum base may include a variety of other ingredients, such as components selected from elastomer solvents, emulsifiers, plasticizers, fillers, and mixtures thereof. As mentioned above, the use of elastomer solvents is not needed to masticate the rubber during the manufacturing process. It may be present in limited amounts, but can lessen from the non-stick properties of the invention if used in amounts above about 5% by weight of the gum base. In certain embodiments of the invention, elastomer solvents may be used in amounts of about 4% to about 5% by weight of the gum base to provide non-stick properties which are sufficient to provide non-stick properties to teeth, dentures, oral implants and other oral prosthetics.

In some embodiments, the gum base may also contain less than conventional amounts of elastomer solvents to aid in softening the elastomer component. Such solvents are not required, but may be used in limited amounts along with the non-stick inducing components. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof.

The elastomer solvent may be employed in the gum base in less than conventional amounts, for example, amounts from about 0% to about 5.0%, and preferably from about 0.1% to about 3.0%, by weight, of the gum base. In some embodiments, the gum base includes a maximum of about 5.0% by weight of an elastomer solvent. In other embodiments, the gum base is free of added elastomer solvent. In some embodiments the gum base is also free of added waxes.

Desirably, the incorporation of an elastomer solvent in the gum base does not interfere with the non-stick inducing components of the gum base. In particular, the elastomer solvent desirably softens the gum base without contributing to stickiness. Moreover, the Tg of the gum base desirably does not change more than +/- three (3 °) upon incorporation of the elastomer solvent in the gum base.

In some embodiments, the elastomer solvent employed may have at least one hydrophilic portion and at least one hydrophobic portion such that the hydrophilic portion orients inwardly within a gum base and such that the hydrophilic portion orients outwardly within a gum base made from elastomers. Suitable elastomer solvents having at least one hydrophilic portion and at least one hydrophobic portion include, for example, methyl ester liquid rosin. It is especially useful to incorporate a methyl ester liquid rosin in relatively low amounts. Methyl ester liquid rosin interferes less with the non-stick inducing components as compared to other resins, but yet acts to increase softening of the gum base without contributing to increased stickiness when used in combination with the non-stick inducing component.

Desirably, a methyl ester liquid rosin is incorporated in a gum base in an amount from about 0.5% by weight to about 5.0% by weight of the gum base. More desirably, a methyl ester liquid rosin is incorporated in a gum base in an amount from about 1.0% by weight to about 3.0% by weight of the gum base.

The gum base also may include emulsifiers which aid in dispersing the immiscible components of the gum base into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 0% to about 50%, and more specifically, from about 2% to about 7%, by weight, of the gum base.

The gum base also may include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include triacetin (glyceryl triacetate), lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, waxes, and the like, and mixtures thereof. The aforementioned plasticizers and softeners are generally employed in the gum base in amounts up to about 20% by weight of the gum base, and more specifically in amounts from about 2% to about 12%, by weight of the gum base.

Suitable waxes, include for example, natural and synthetic waxes, petroleum waxes such as polyurethane waxes, polyethylene waxes, paraffin waxes, microcrystalline waxes, and fatty waxes. Wax can be present in the gum base in an amount from about 1% to about 15% by weight of the gum base. When used, the wax is desirably present in an amount from about 2% to about 10% by weight of the gum base and, more desirably, is present in an amount from about 3% to about 8% by weight of the gum base.

In some embodiments, the gum base includes a maximum of about 8% of a wax. In other embodiments, the gum base is free of added wax.

Anhydrous glycerin also may be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention also may include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, starch, tricalcium phosphate, dicalcium phosphate, calcium sulfate and the like, and mixtures thereof. These fillers or adjuvants may be used in the gum base compositions in various amounts. The filler may be present in an amount from about zero to about 40% by weight of the gum base and, more specifically, from about zero to about 30%, by weight, of the gum base. In some embodiments, the amount of filler will be from about zero to about 15% by weight of the gum base and, more specifically, from about 3% to about 11%, by weight, of the gum base.

In some embodiments, the gum base also may include at least one hydrophilic, water-absorbing polymer to help reduce the stickiness of the gum base and any resultant gum product made from the gum base. Suitable hydrophilic, water-absorbing polymers include the following: native and modified starches; chemically modified cellulose, including methyl cellulose, ethyl cellulose, carboxymethyl cellulose, hydroxypropyl cellulose; gums including xanthan gum, carageenan gum, guar gum, gum arabic, locust bean gum, curdlan, arabinoxylan, agara, and alginate; and pectin and gelatin.

In general, at least one hydrophilic, water-absorbing polymer is included in an amount from about 0.1% to about 10% by weight of the gum base. Desirably, at least one hydrophilic, water-absorbing polymer is present in an amount from about 2% by weight to about 8% by weight of the gum base. More desirably, at least one hydrophilic, water-absorbing polymer is present in an amount from about 3% by weight to about 6% by weight of the gum base.

In some embodiments, the chewing gum compositions include at least one elastomer and at least one agent capable of changing the molecular weight of the elastomer over time, such as by degrading the elastomer or increasing the molecular weight of the elastomer.

Any agent that is capable of degrading an elastomer may be incorporated in various chewing gum composition embodiments. Desirably, the agent is lipophilic and is incorporated in the gum base composition. In some embodiments, an agent serves to enhance the degradation of the gum product in the presence of light, i.e., photodegradation. A particularly useful agent that is capable of enhancing the elastomer degradation in the presence of light is chlorophyll and derivatives such as chlorophyllin, pheophytin, pyropheophytin and pheophorbide. Chlorophyll and its derivatives are capable of absorbing light and generating free radicals. The presence of free radicals may react with elastomer components to render them less sticky.

Other suitable components to enhance degradation include other photosensitizers such as phthalocyanine derivatives, riboflavin, hemoglobin, myoglobin, and heme. In some embodiments, the elastomer component may be degraded by oxidation to form smaller discontinuous phases of elastomer. In some embodiments, the elastomer component may interact with free radicals to increase the elastomer molecular weight. When certain elastomer components are used in combination with the chlorophyll, such as elastomers with unsaturated bonds, the chlorophyll may increase the molecular weight of the elastomeric component by inducing higher molecular weight reaction products caused by free radical generation. A variety of reaction possibilities may occur depending on such factors as the type of elastomer present, the amount of degradation agent present such as free-radical inducing agent, the particular chewing gum composition, as well as the type of light and environmental exposure the chewing gum sees.

In some embodiments, the at least one agent capable of degrading an elastomer is encapsulated. Encapsulation may be desirable to prevent premature degradation of the chewing gum base prior to mastication. The at least one agent capable of degrading an elastomer may be encapsulated as microcapsules or microparticles as described in PCT Publication No. WO 2004/064544. Suitable encapsulants include, but are not limited to, fats, polymers, carbohydrates and combinations thereof. A particularly suitable encapsulant is gum arabic.

In some embodiments the agent capable of degrading an elastomer is present in the chewing gum composition as part of the center-fill. In such compositions the agent may be encapsulated or non-encapsulated.

In some embodiments, the agent capable of degrading an elastomer is present in a coating of the chewing gum composition. For example, such coatings are used on sugarless tablet gums to provide crunchiness as well as flavor, sweetness and sensate perception. In such compositions, the agent may be encapsulated or non-encapsulated.

In general, the at least one agent capable of degrading an elastomer is present in an amount sufficient to substantially degrade the chewing gum product subsequent to mastication over time. In some embodiments, the at least one agent capable of degrading an elastomer is present in an amount sufficient to substantially degrade the chewing gum product subsequent to mastication within about ten (10) weeks.

Desirably, the at least one agent capable of degrading an elastomer is present in an amount from about 0.01% to about 0.3% by weight of the gum base. More desirably, the at least one agent capable of degrading an elastomer is present in an amount from about 0.05% to about 0.2% by weight of the gum base. Most desirably, the at least one agent capable of degrading an elastomer is present in an amount from about 0.07% to about 0.12% by weight of the gum base.

In general, chlorophyll may be present in an amount from about 0.01% to about 0.3% by weight of the gum base. Desirably, chlorophyll may be present in an amount from about 0.05% to about 0.2% by weight of the gum base. More desirably, chlorophyll may be present in an amount from about 0.07 to about 0.12% by weight of the gum base.

In some embodiments, at least one antioxidant may be present in the chewing gum bases. Desirably, the antioxidant is water-soluble. Suitable antioxidants include, for example, butylated hydroxytoluene (BHT), butylated hydroxyanisole (BHA), propyl gallate, vitamin C, vitamin E and mixtures thereof.

When an antioxidant is included in the gum base, the antioxidant is generally present in an amount from about 0.01% by weight to about 0.3% by weight of the gum base. Desirably, the antioxidant is included in the gum base in an amount from about 0.05% by weight to about 0.1 % by weight of the gum base. When incorporated in embodiments together with the agent capable of degrading the elastomer, it is desirable to keep the antioxidant down to lower amounts to prevent any interference with free radicals which may be generated by photosensitizers.

The chewing gum bases of the present invention do not stick to a variety of surfaces or exhibit reduced stickiness as compared to chewing gum bases not having the present inventive compositions. In particular, during manufacture, the chewing gum bases do not stick to processing equipment. Moreover, during chewing, the chewing gum bases do not stick to surfaces within the oral cavity, including the teeth and any orthodontic or dental appliances. Additionally, gum boluses of the present invention will not stick to, or will have reduced stickiness to a variety of surfaces external to the oral cavity, including, for example, asphalt, bricks, wood, plastic, hair, skin, carpeting, and the soles of shoes, as compared to gum boluses not having the formulations of the gum boluses of the present invention.

Some embodiments of the present invention provide chewing gum compositions and products that have non-stick surfaces during processing and subsequent to chewing into a gum bolus.

In some embodiments, a chewing gum base as discussed above may be incorporated in a chewing gum composition in an amount from about 5% by weight to about 95% by weight. More desirably, a chewing gum base may be present in an amount from about 28% by weight to about 42% by weight of the total chewing gum composition, and even more specifically, the range may be from about 28% to about 30% by weight of the total chewing gum composition. In the case of center-filled chewing gum compositions, this weight percent may be based on the gum region rather than the center-filled region.

The present inventive chewing gum compositions may include bulk sweeteners such as sugars, sugarless bulk sweeteners, or the like, or mixtures thereof.

Suitable sugar sweeteners generally include mono-saccharides, di-saccharides and poly-saccharides such as but not limited to, sucrose (sugar), dextrose, maltose, dextrin, xylose, ribose, glucose, lactose, mannose, galactose, fructose (levulose), invert sugar, fructo oligo saccharide syrups, partially hydrolyzed starch, corn syrup solids, isomaltulose, and mixtures thereof.

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythrytol, hydrogenated starch hydrolysate, stevia and mixtures thereof.

Suitable hydrogenated starch hydrolysates include those disclosed in U.S. Pat. Nos. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured SPI Polyols, Inc. of New Castle, Delaware, also are useful.

The sweetening agents used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. The term "sweetener" or "sweetening agent" may encompass bulk sweeteners as well as high intensity sweeteners. Without being limited to particular sweeteners, representative categories and examples include:
(a) water-soluble sweetening agents such as dihydrochalcones, monellin, stevia, steviosides, rebaudioside A, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideoxy-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as thaumaoccous danielli (Thaumatin I and II); and
(f) the naturally occurring sweetener monatin (2-hydroxy-2-(indol-3-ylmethyl)-4-aminoglutaric acid) and its derivatives; and
(g) the sweetener Lo han guo (sometimes also referred to as "Lo han kuo").

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

In general, the sweetener is present in an amount sufficient to provide the level of sweetness desired, and this amount may vary with the sweetener or combination of sweeteners selected. The exact range of amounts for each type of sweetener may be selected by those skilled in the art. In general, a sweetener is present in amounts from about 0.001% to about 3.0% by weight and, more specifically, from about 0.01% to about 2.0% by weight of the chewing gum composition.

The chewing gum compositions also may include flavors (flavorings or flavor agents). Flavors which may be used include those flavors known to the skilled artisan, such as natural and artificial flavors. These flavors may be chosen from synthetic flavor oils and flavoring aromatics and/or oils, oleoresins and extracts derived from plants, leaves, flowers, fruits, and so forth, and combinations thereof. Non-limiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, watermelon, apricot, banana, melon, ume, cherry, raspberry, blackberry, tropical fruit, mango, mangosteen, pomegranate, papaya, and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavors may be used in liquid or solid form and may be used individually or in admixture. Commonly used flavors include mints such as peppermint, menthol, spearmint, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally, any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavor agent may be employed in either liquid form and/or dried form. When employed in the latter form, suitable drying means such as spray drying the oil may be used. Alternatively, the flavor agent may be absorbed onto water soluble materials, such as cellulose, starch, sugar, maltodextrin, gum arabic and so forth or may be encapsulated. The actual techniques for preparing such dried forms are well-known.

In some embodiments, the flavor agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

The amount of flavor agent employed herein may be a matter of preference subject to such factors as the individual flavor and the strength of flavor desired. Thus, the amount of flavoring may be varied in order to obtain the result desired in the final product and such variations are within the capabilities of those skilled in the art without the need for undue experimentation. In general, the flavor agent is present in amounts from about 0.02% to about 5.0% by weight and, more specifically, from about 0.1% to about 4.0% by weight of the chewing gum product, and even more specifically, about 0.8% to about 3.0%

A variety of other traditional ingredients also may be included in the chewing gum products in effective amounts such as coloring agents, antioxidants, preservatives, and the like. Coloring agents may be used in amounts effective to produce the desired color. The coloring agents may include pigments which may be incorporated in amounts up to about 6%, by weight of the composition. For example, titanium dioxide may be incorporated in amounts up to about 2%, and preferably less than about 1%, by weight of the composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Additional additives, such as sensates including physiological cooling agents; warming agents and tingling agents; throat-soothing agents; spices; herbs and herbal extracts, tooth-whitening agents; breath-freshening agents; vitamins and minerals; bioactive agents; caffeine; nicotine; drugs and other actives may also be included in any or all portions or regions of the chewing gum products. Such components may be used in amounts sufficient to achieve their intended effects.

With respect to cooling agents, a variety of well known cooling agents may be employed. For example, among the useful cooling agents are included menthol (its natural or synthetic derivatives), xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, 2-isopropanyl-5-methylcyclohexanol (from Hisamitsu Pharmaceuticals, hereinafter "isopregol"), cyclohexanamides, menthyl acetate, menthyl lactate, methyl salicylate, N,2,3-trimethyl-2-isopropyl butanamide (WS-23), N-ethyl-p-menthane-3-carboxamide (WS-3), menthyl succinate, 3,1-menthoxypropane 1,2-diol, glutarate esters, menthone glycerol ketals (FEMA 3807, tradename FRESCOLAT® type MGA); 3-1-menthoxypropane-1,2-diol (from Talcasago, FEMA 3784); WS-30, WS-14, Eucalyptus extract (p-Mehtha-3,8-Diol), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate, isopulegol, p-menthane-2,3-diol, 6-isopropyl-9-methyl-1,4-dioxaspiro[4,5]decane-2-methanol, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, and substituted p-menthane-carboxamides among others, and combinations thereof. These and other suitable cooling agents are further described in the following U.S. patents, U.S. 4,230,688 and 4,032,661 to Rowsell et al.; 4,459,425 to Amano et al.; 4,136,163 to Watson et al.; 5,266,592 to Grub et al.; and 6,627,233 to Wolf et al. Cooling agents are generally present in amount of 0.01% to about 10.0%.

Warming agents may be selected from a wide variety of compounds known to provide the sensory signal of warming to the individual user. These compounds offer the perceived sensation of warmth, particularly in the oral cavity, and often enhance the perception of flavors, sweeteners and other organoleptic components. Useful warming agents include those having at least one allyl vinyl component, which may bind to oral receptors. Examples of suitable warming agents include, but are not limited to: vanillyl alcohol n-butylether (TK-1000, supplied by Takasago Perfumery Company Ltd., Tokyo, Japan); vanillyl alcohol n-propylether; vanillyl alcohol isopropylether; vanillyl alcohol isobutylether; vanillyl alcohol n-aminoether; vanillyl alcohol isoamylether; vanillyl alcohol n-hexylether; vanillyl alcohol methylether; vanillyl alcohol ethylether; gingerol; shogaol; paradol; zingerone; capsaicin; dihydrocapsaicin; nordihydrocapsaicin; homocapsaicin; homodihydrocapsaicin; ethanol; isopropyl alcohol; iso-amylalcohol; benzyl alcohol; glycerine; chloroform; eugenol; cinnamon oil; cinnamic aldehyde; phosphate derivatives thereof; and combinations thereof.

Tingling agents may provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; black pepper extract (piper nigrum), including the active ingredients chavicine and piperine; Echinacea extract; Northern Prickly Ash extract; and red pepper oleoresin. In some embodiments, alkylamides extracted from materials such as jambu or sanshool may be included. Additionally, in some embodiments, a sensation is created due to effervescence. Such effervescence is created by combining an alkaline material with an acidic material, either or both of which may be encapsulated. In some embodiments, an alkaline material may include alkali metal carbonates, alkali metal bicarbonates, alkaline earth metal carbonates, alkaline earth metal bicarbonates and mixtures thereof. In some embodiments, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Patent No. 6,780,443, the entire contents of which are incorporated herein by reference for all purposes. Tingling agents are described in U.S. Patent No. 6,780,443 to Nakatsu et al., U.S. Patent No. 5,407,665 to McLaughlin et al., U.S. Patent No. 6,159,509 to Johnson et al. and U.S. Patent No. 5,545,424 to Nakatsu et al.

The sensation of warming or cooling effects may be prolonged with the use of a hydrophobic sweetener as described in U.S. Patent Application Publication 2003/0072842 A1 to Johnson et al. For example, such hydrophobic sweeteners include those of the formulae I-XI referenced therein. Perillartine may also be added as described in U.S. Patent No. 6,159,509.

Breath freshening agents, in addition to the flavors and cooling agents described hereinabove, may include a variety of compositions with odor controlling properties. Such breath freshening agents may include, without limitation, cyclodextrin and magnolia bark extract. The breath freshening agents may further be encapsulated to provide a prolonged breath freshening effect. Examples of malodor-controlling compositions are included in U.S. Patent No. 5,300,305 to Stapler et al. and in U.S. Patent Application Publication Nos. 2003/0215417 and 2004/0081713.

A variety of oral care products also may be included in some embodiments of the instant chewing gum compositions. Oral care agents that may be used include those actives known to the skilled artisan, such as, but not limited to, surfactants, breath-freshening agents, anti-microbial agents, antibacterial agents, oral malodor control agents, fluoride compounds, quaternary ammonium compounds, remineralization agents and combinations thereof. Such oral care products may include tooth whiteners, stain removers, anticalculus agents, and antiplaque agents. Examples of these include, but are not limited to hydrolytic agents including proteolytic enzymes, abrasives such as hydrated silica, calcium carbonate, sodium bicarbonate and alumina, other active stain-removing components such as surface-active agents, such as anionic surfactants such as sodium stearate, sodium palminate, sulfated butyl oleate, sodium oleate, salta of fumaric acid, glycerol, hydroxylated lecithin, sodium lauryl sulfate and chelators such as polyphosphates, which are typically employed in dentifrice compositions as tartar control ingredients. Also included are tetrasodium pyrophosphate and sodium tri-polyphosphate, sodium tripolyphosphate, xylitol, hexametaphosphate, and anabrasive silica. Further examples are included in the following U.S. Patents which are incorporated in their entirety herein by reference: U.S. Patent Nos. 5,227,154 to Reynolds, 5,378,131 to Greenberg and 6,685,916 to Holme et al. Suitable oral care actives such as remineralization agents, antimicrobials, and tooth-whitening agents are described in assignee's co-pending U.S. Patent Application No. US2006024244 and
entitled "Tooth-Whitening Compositions and Delivery Systems Therefor", and the like, and mixtures thereof.

A variety of drugs, including medications, herbs, and nutritional supplements may also be included in the chewing gum compositions. Examples of useful drugs include ace-inhibitors, antianginal drugs, anti-arrhythmias, anti-astlunatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra®, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, anti-pyretics, appetite suppressants, expectorants, anti-anxiety agents, antiulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, antithrombotic drugs, hypnotics, anti-emetics, anti-nauseants, anti-convulsants, neuromuscular drugs, hyper- and hypo-glycemic agents, thyroid and anti-thyroid preparations, diuretics, antispasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in the present inventive chewing gum compositions include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists.

Analgesics include opiates and opiate derivatives, such as Oxycontin, ibuprofen, aspirin, acetaminophen, and combinations thereof that may optionally include caffeine.

Other drug ingredients for use in embodiments include anti-diarrheals such as immodium AD, anti-histamines, anti-tussives, decongestants, vitamins, and breath fresheners. Also contemplated for use herein are anxiolytics such as Xanax; anti-psychotics such as clozaril and Haldol; non-steroidal anti-inflammatories (NSAID's) such as ibuprofen, naproxen sodium, Voltaren and Lodine, anti-histamines such as Claritin, Hismanal, Relafen, and Tavist; anti-emetics such as Kytril and Cesamet; bronchodilators such as Bentolin, Proventil; anti-depressants such as Prozac, Zoloft, and Paxil; anti-migraines such as Imigra, ACE-inhibitors such as Vasotec, Capoten and Zestril; anti-Alzheimer's agents, such as Nicergoline; and CaH-antagonists such as Procardia, Adalat, and Calan.

Moreover, some embodiments of chewing gum compositions can include H2-antagonists. Examples of suitable H2-antagonist include cimetidine, ranitidine hydrochloride, famotidine, nizatidien, ebrotidine, mifentidine, roxatidine, pisatidine and aceroxatidine.

Active antacid ingredients include, but are not limited to, the following: aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

A variety of other nutritional supplements also may be included in the gum compositions. Virtually any vitamin or mineral may be included. For example, vitamin A, vitamin C, vitamin D, vitamin E, vitamin K, vitamin B₆, vitamin B₁₂, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements are set forth in U.S. Patent Application Publication Nos. 2003/0157213 A1, 2003/0206993 and 2003/0099741 A1.

Various herbs also may be included such as those with various medicinal or dietary supplement properties. Herbs are generally aromatic plants or plant parts that can be used medicinally or for flavoring. Suitable herbs can be used singly or in various mixtures. Commonly used herbs include Echinacea, Goldenseal, Calendula, Aloe, Blood Root, Grapefruit Seed Extract, Black Cohosh, Cranberry, Ginko Biloba, St. John's Wort, Evening Primrose Oil, Yohimbe Bark, Green Tea, Maca, Bilberry, Lutein, and combinations thereof.

Acidulants also may be included in the chewing gum compositions. Suitable acidulants include, for example, malic acid, adipic acid, citric acid, tartaric acid, fumane acid, and mixtures thereof.

Any of the aforementioned additives for use in a chewing gum composition, as well as other conventional additives known to one having ordinary skill in the art, such as thickeners, may be incorporated into the chewing gum base of the chewing gum compositions or any coating that the chewing gum product may contain.

The chewing gum compositions of the present invention may be formed into a variety of shapes and sizes and may take various product forms, including without limitation, sticks, slabs, chunks, balls, pillows, tablet, pellet, center-filled, pressed tablet, deposited, compressed chewing gum or any other suitable format as well as coated and uncoated forms.

When the chewing gum compositions are formed into coated products, the coating may be applied by any method known in the art. The coating composition may be present in an amount from about 2% to about 60%, more specifically from about 25% to about 35% by weight of the total center-filled gum piece, even more specifically about 30% by weight of the gum piece.

The outer coating may be hard or crunchy. Typically, the outer coating may include sorbitol, maltitol, xylitol, erythritol, isomalt, and other crystallizable polyols; sucrose may also be used. Furthermore the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include colored flakes or speckles. If the composition comprises a coating, it is possible that one or more oral care actives can be dispersed throughout the coating. This is especially preferred if one or more oral care actives is incompatible in a single phase composition with another of the actives. Flavors may also be added to yield unique product characteristics.

In the case of center-filled chewing gum products, the coating may also be formulated to assist with increasing the thermal stability of the gum piece and preventing leaking of the liquid fill. In some embodiments, the coating may include a gelatin composition. The gelatin composition may be added as a 40% by weight solution and may be present in the coating composition from about 5% to about 10% by weight of the coating composition, and more specifically about 7% to about 8%. The gel strength of the gelatin may be from about 130 bloom to about 250 bloom.

Other materials may be added to the coating to achieve desired properties. These materials may include without limitations, cellulosics such as carboxymethyl cellulose, gelatin, pullulan, alginate, starch, carrageenan, xanthan gum, gum arabic and polyvinyl acetate (PVA).

The coating composition may also include a pre- coating which is added to the individual gum pieces prior to an optional hard coating. The pre-coating may include an application of polyvinyl acetate (PVA). This may be applied as a solution of PVA in a solvent, such as ethyl alcohol. When an outer hard coating is desired, the PVA application may be approximately 3% to 4% by weight of the total coating or about 1% of the total weight of the gum piece (including a liquid-fill, gum region and hard coating).

Some embodiments extend to methods of processing an elastomer in a gum base. In particular, some embodiments extend to methods of processing an elastomer for use in a gum base without substantially changing the Tg of the gum base as measured by differential scanning calorimetry (DSC). Such methods include the step of mixing at least one elastomer and at least one fat.

Differential scanning calorimetry (DSC) is a thermoanalytical technique in which the difference in the amount of heat required to increase the temperature of a sample and reference are measured as a function of temperature. The basic principle underlying this technique is that, when the sample undergoes a physical transformation such as phase transitions, more (or less) heat will need to flow to it than the reference to maintain both at the same temperature. Whether more or less heat must flow to the sample depends on whether the process is exothermic or endothermic. For example, as a solid sample melts to a liquid it will require more heat flowing to the sample to increase its temperature at the same rate as the reference. This is due to the absorption of heat by the sample as it undergoes the endothermic phase transition from solid to liquid. Likewise, as the sample undergoes exothermic processes (such as crystallization) less heat is required to raise the sample temperature. By observing the difference in heat flow between the sample and reference, differential scanning calorimeters are able to measure the amount of energy absorbed or released during such transitions. DSC is used to observe more subtle phase changes, such as glass transitions.

In additional embodiments, the methods of making a chewing gum base include processing an elastomer for use in a gum base without substantially changing the Tg of the gum base as measured by DSC by mixing at least one elastomer and at least one fat or oil.

Moreover, in further embodiments, the methods of making a chewing gum base include providing a solid elastomer composition suitable for use in a chewing gum base and combining with the solid elastomer composition a non-stick inducing component that includes at least one fat or oil having an HLB range of 3.5 to 13. In such methods, non-stick inducing component is present in amounts sufficient to permit processing of the solid elastomer composition into a softened, processable mass.

In some embodiments, the above-described methods of making a chewing gum base may be carried out in the presence of lower than conventional amounts of elastomer solvent. In such embodiments, the elastomer solvent includes a maximum of about 5.0% of the gum base. Desirably, an elastomer solvent can be mixed with an elastomer and non-stick inducing component to soften the elastomer without causing the resultant chewing gum base to become sticky.

In other embodiments, the above-described methods of making a chewing gum base are carried out in the absence of added elastomer solvent.

The manner in which the gum base components are mixed is not critical and such mixing is performed using standard apparatuses known to those skilled in the art. In a typical method, at least one elastomer is admixed with at least one mastication processing aid, which for purposes of the invention includes one or more non-stick inducing components and agitated for a period of from 1 to 30 minutes. The remaining ingredients, such as the texture-modifier and/or softener are then admixed, either in bulk or incrementally, while the gum base mixture is blended again for 1 to 30 minutes.

The features and advantages of the present invention are more fully shown by the following examples which are provided for purposes of illustration, and are not to be construed as limiting the invention in any way.

### EXAMPLE 1

**TABLE 1**

| **INVENTIVE GUM BASE COMPOSITIONS A-F** | | | | | | |
|---|---|---|---|---|---|---|
| **Component** | **% by weight** | | | | | |
| | **A** | **B** | **C** | **D** | **E** | **F** |
| Polyvinylacetate (Vinnapas B 30 sp) | 42.96 | 42.96 | 42.96 | 32.65 | 30.93 | 30.93 |
| Triacetin | 7.04 | 7.04 | 7.04 | 5.35 | 5.07 | 5.07 |
| GMS¹ | 2.86 | 5.71 | 4.29 | 9.14 | 8.29 | 8.29 |
| Butyl Rubber | 0 | 0 | 0 | 0 | 0 | 0 |
| Polyisobutylene (Oppanol B 50 SF) | 10 | 5 | 10 | 5 | 10 | 5 |
| Hydrogenated cottonseed oil 70°C melting temperature | 7.14 | 14.29 | 10.71 | 22.86 | 20.71 | 20.71 |
| Hydrogenated cottonseed oil 45°C melting temperature | 10 | 5 | 5 | 5 | 5 | 10 |
| Talc | 20 | 20 | 20 | 20 | 20 | 20 |
| Total | 100 | 100 | 100 | 100 | 100 | 100 |

| | | | | | | |
|---|---|---|---|---|---|---|
| ¹ acronym for glycerol monostearate | | | | | | |

**TABLE 2**

| **INVENTIVE GUM BASE COMPOSITIONS G-I** | | | |
|---|---|---|---|
| **Component** | | | |
| | **G** | **H** | **I** |
| Polyvinylacetate (Vinnapas B 30 sp) | 30.93 | 42.96 | 35.91 |
| Triacetin | 5.07 | 7.04 | 5.89 |
| GMS | 6.86 | 4.29 | 6.8 |
| Butyl Rubber | 0 | 0 | 0 |
| Polyisobutylene (Oppanol B 50 SF) | 10 | 5 | 7.2 |
| Hydrogenated cottonseed oil 70 C melting temperature | 17.14 | 10.71 | 17 |
| Hydrogenated cottonseed oil 45 C melting temperature | 10 | 10 | 7.2 |
| Talc | 20 | 20 | 20 |
| Total | 100 | 100 | 100 |

Gum bases are prepared as set forth in Tables 1-2 above. In particular, inventive gum base compositions A-I are prepared as follows:
A Master Batch (masticated elastomer) was prepared in the following manner:
   Elastomer (1250 grams) was put in 3000 ml kettle heated to 128°C and was mixed for 15 minutes. Hydrogenated cottonseed oil with a melting point of about 70°C (1250 grams) was added over a 90 minute period. Glycerol monohydrate (500 grams) was added over a period of 15 minutes. The batch was mixed for another 20 minutes to fully homogenize.

### Gum Base

Gum base was then prepared from the Master Batch. Polyvinyl acetate (1200 grams) was added in the 3000 ml kettle heated to 128°C and was mixed for 15 minutes. Master Batch (720 grams) prepared as previously described was added and mixed for 10 minutes. Hydrogenated cottonseed oil with a melting point of about 40°C (283 grams) was added and mixed for 10 minutes. Triacetin (197grams) was added and mixed for 10 minutes. Talc (600 grams) was added and mixed for 20 minutes to obtain a homogeneous mixture.

### EXAMPLE 2

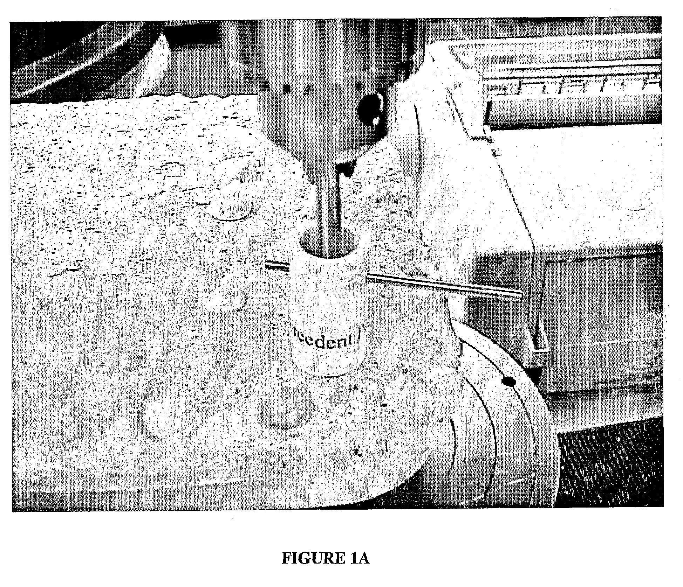

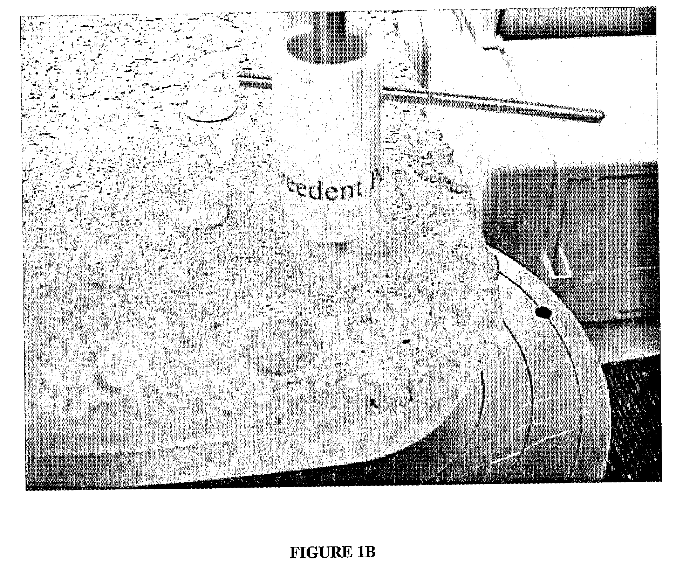

Inventive chewing gum compositions using the inventive gum base compositions A-I were chewed for 30 minutes and the cuds deposited on a concrete brick inside sample holders made out of 1.25 cm diameter PVC pipe. FIGS. 1A and 1B are photographs that illustrate how gum samples were applied to a brick and subjected to an adhesion test as described herein. The cuds were compressed to imbed them in the concrete. The brick with the imbedded cuds was conditioned for 72 hours at room temperature. Instron Corporation (Norwood, MA) universal material testing machine was used to measure the force required to remove the cuds from the concrete surface. When the sample was completely removed off the surface of the concrete the reading was a true measurement of adhesion. Reliable adhesion reading could not be obtained for the tested commercial samples since they broke apart (cohesive failure) during testing. The adhesion reading for those samples was assumed to be higher than the obtained reading for cohesive failure. Higher adhesion readings at room temperature are indicative of greater stickiness of the gum.

The inventive chewing gum bases contained a high melting point fat (i.e., hydrogenated cottonseed oil having a melting temperature of about 70 ° C) and a low melting point fat (i.e., hydrogenated cottonseed oil having a melting point of about 40 °C).

Moreover, two commercially available chewing gum products, one sold under the trademark Freedent Peppermint by William Wrigley Jr., Company and the other sold under the trademark Orbit by William Wrigley, Jr., Company, also were deposited in a ½" PVC pipe and applied onto the brick in the same manner used with respect to inventive chewing gum bases A-I. The Freedent product is sold as a product that "Won't stick to most dental work™".

The maximum breaking force of each of the samples was measured using an Instron testing machine. The testing was done at room temperature at a speed of 1 inch/minute. The results are set forth in Table 3 below.

**TABLE 3**

| **MAXIMUM BREAKING FORCE TO REMOVE GUM CUD FROM BRICK OF EACH GUM SAMPLE** | |
|---|---|
| **Composition** | **Maximum Breaking Force lbs.in.²** |
| Freedent Peppermint | 3.12* |
| Orbit | 1.21* |
| A | 1.73 |
| B | 2.20 |
| C | 2.04 |
| D | 0.04 |
| E | 0.04 |
| F | 0.05 |
| G | 0.05 |
| H | 0.70 |
| I | 1.79 |

| | |
|---|---|
| * Gum sample broke apart before it could be removed from the surface. This is indicative of cohesive failure and is indicative of an even higher adhesive value. | |

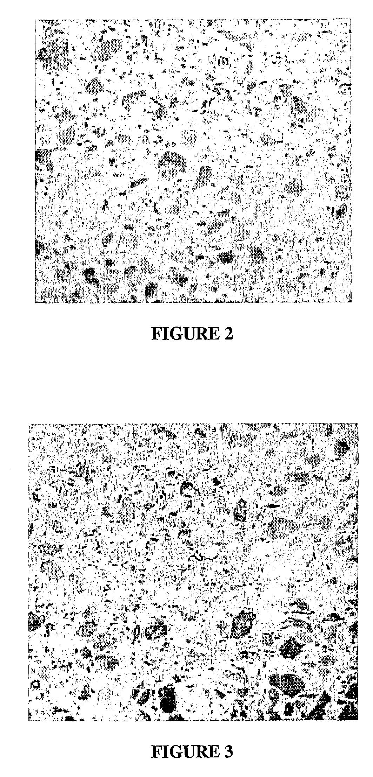

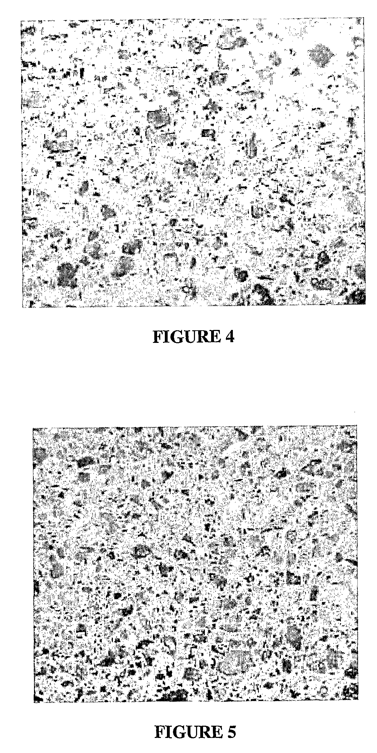

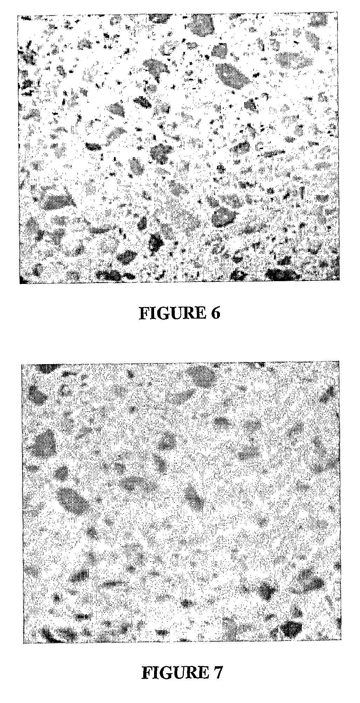

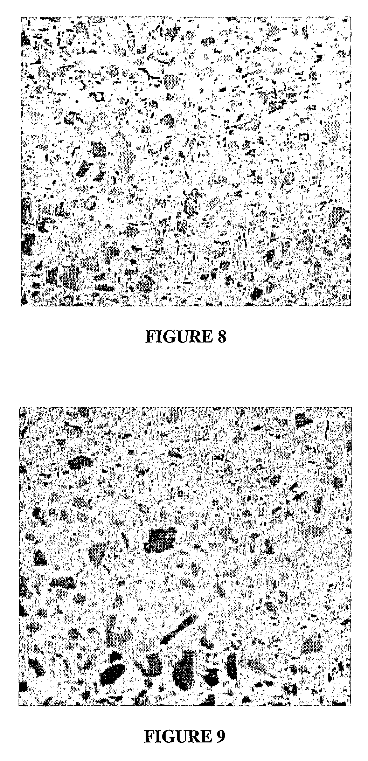

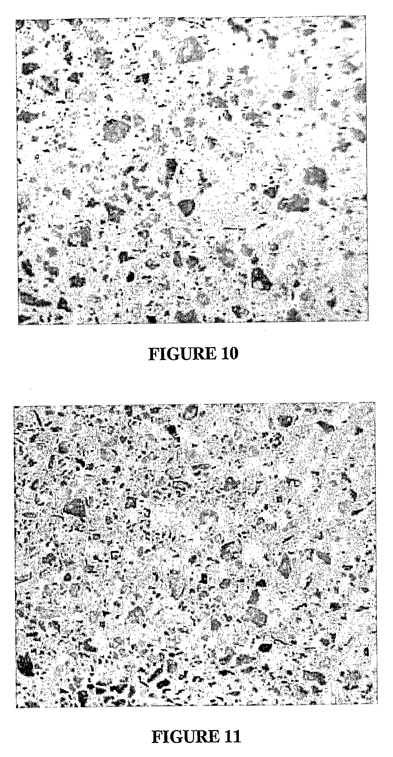

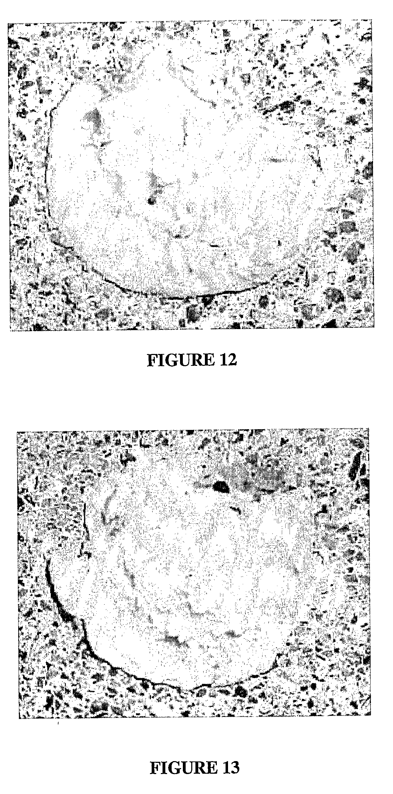

Furthermore, a photograph of any cud residue remaining on the brick after the application of removal force to each of the samples is shown in FIGS. 2-13. In particular, Figure 2 is a photograph of any cud remaining on the brick after the application of a removal force to Inventive Gum Sample A. Figure 3 is a photograph of any cud remaining on the brick after the application of a removal force to Inventive Gum Sample B. Figure 4 is a photograph of any cud remaining on the brick after the application of a removal force to Inventive Gum Sample C. Figure 5 is a photograph of any cud remaining on the brick after the application of a removal force to Inventive Gum Sample D. Figure 6 is a photograph of any cud remaining on the brick after the application of a removal force to Inventive Gum Sample E. Figure 7 is a photograph of any cud remaining on the brick after the application of a removal force to Inventive Gum Sample F. Figure 8 is a photograph of any cud remaining on the brick after the application of a removal force to Inventive Gum Sample G. Figure 9 is a photograph of any cud remaining on the brick after the application of a removal force to Inventive Gum Sample H. Figure 10 is a photograph of any cud remaining on the brick after the application of a removal force to Inventive Gum Sample I. Figure 11 is a photograph of any cud remaining on the brick after the application of a removal force to an Inventive Gum Sample J. Figure 12 is a photograph of any cud remaining on the brick after the application of a removal force to the Freedent Gum Sample. Figure 13 is a photograph of any cud remaining on the brick after the application of removal force to the Orbit Gum Sample.

As is apparent from Table 3 above and the photographs attached as FIGS. 2-11, chewing gums made from inventive chewing gum base compositions all could be completely or substantially removed from the brick. The Freedent Peppermint and Orbit samples broke apart cohesively and were not able to be removed from the brick surface as seen in Figures 12 and 13.

### EXAMPLE 3

**TABLE 4**

| **GUM BASE COMPOSITIONS M-S** | | | | | | | |
|---|---|---|---|---|---|---|---|
| **Component** | **% by weight** | | | | | | |
| | **M** | **N** | **0** | **P** | **Q** | **R** | **S** |
| Polyvinylacetate (Vinnapas B 30 sp)¹ | 42.98 | 32 | 15 | 43 | 40 | 43 | 40 |
| Polyvinylacetate (Vinapas B 1.5 sp)² | 0 | 0 | 28 | 0 | 0 | 0 | 0 |
| Triacetin | 2.58 | 5.25 | 2.46 | 7.05 | 6.56 | 7.05 | 6.56 |
| GMS³ | 18.15 | 17.75 | 6.54 | 4.95 | 4 | 4 | 4.44 |
| Butyl Rubber | 9.55 | 0 | 0 | 0 | 0 | 10 | 8 |
| Polyisobutylene (Oppanol B 50 SF)⁴ | 0 | 10 | 10 | 10 | 10 | 0 | 0 |
| Hydrogenated cottonseed oil 70 C melting temperature | 9.55 | 15 | 18 | 15 | 10 | 10 | 8 |
| Hydrogenated cottonseed oil 45 C melting temperature | 0 | 0 | 0 | 0 | 9.44 | 5.95 | 6 |
| Talc | 17.19 | 20 | 20 | 20 | 20 | 20 | 20 |
| Starch | 0 | 0 | 0 | 0 | 0 | 0 | 7 |
| Total | 100 | 100 | 100 | 100 | 100 | 100 | 100 |

| | | | | | | | |
|---|---|---|---|---|---|---|---|
| available from **Wacker Specialties** ² available from **Wacker Specialties** ³ acronym for glycerol monostearate ⁴ available from **BASF Corp**. | | | | | | | |

Gum base compositions are prepared as set forth in Table 4 above. In particular, gum bases M-S are prepared in similar manner as described for the compositions described in Tables 1 and 2.

### EXAMPLE 4

**TABLE 5**

| **GUM BASE COMPOSITION T** | |
|---|---|
| **Component** | **% by weight** |
| PVAc 30 | 40 |
| Triacetin | 6.56 |
| Polyethylene Wax AC6 | 5 |
| GMS | 4 |
| PIB B50 | 10 |
| Hydrogenated Cottonseed Oil | 10 |
| Partially Hydrogenated Cottonseed Oil | 4.44 |
| Talc | 20 |

An additional gum base is shown in Table 5 above. The non-stick properties of the gum base were not affected by the incorporation of the polyethylene wax AC6 therein, which is a conventional softening component used in chewing gum base compositions.

### EXAMPLE 5

Table 6 below provides an example of a sugared chewing gum composition useful with any of the inventive gum base compositions.

**TABLE 6**

| **SUGARED REDUCED-STICKINESS CHEWING GUM COMPOSITIONS** | | |
|---|---|---|
| **Component** | **%** | **grams** |
| Gum base | 28 | 70 |
| Corn syrup (glucose) | 14 | 35 |
| Sugar pulverized | 56 | 140 |
| Natural Peppermint oil | 2 | 5 |
| Total | 100 | 250 |

A gum product can be prepared as set forth in Table 7 using any of the inventive chewing gum bases.

### EXAMPLE 6

Table 7 provides an example of a sugarless chewing gum composition useful with any of the inventive gum base compositions.

**TABLE 7**

| **SUGARLESS REDUCED-STICKINESS CHEWING GUM COMPOSITIONS** | | |
|---|---|---|
| **Gum Sugarless** | **%** | **grams** |
| Inventive gum base | 30 | 75 |
| Sorbitol | 46.8 | 117 |
| Maltitol | 9.9 | 24.75 |
| Peppermint flavor | 3 | 7.5 |
| Glycerin | 5 | 12.5 |
| Acesulfame K | 0.1 | 0.25 |
| Aspartame | 0.2 | 0.5 |
| Calcium Carbonate | 5 | 12.5 |
| Total | 100 | 250 |

### EXAMPLE 7

The glass transitions of butyl rubber (BR) and styrene rubber (SBR) gum base samples were determined using modulated differential scanning calorimetry (DSC). Additionally, the glass transitions (Tg) of gum base samples AA-DD having the components set forth in Table 8 below were determined using DSC. In particular, all of the samples were heated under nitrogen purge from -100 °C to 200 °C at 3 °C per minute. The instrument used to measure the glass transition was a TA Instrument 2920 MDSC. Additionally, the melt endotherms for each of the samples were determined using modulated differential calorimetry.

**TABLE 8**

| **GUM BASE COMPOSITIONS** | | | | |
|---|---|---|---|---|
| Component | % by weight | | | |
| | Comparative Master Batch Gum Base AA | Inventive Master Batch Gum Base BB | Comparative Master Batch Gum Base CC | Inventive Master Batch Gum Base DD |
| Butyl Rubber | 50% | 50% | ---- | ---- |
| Styrene Butadiene Rubber | ---- | ---- | 50% | 50% |
| Resin¹ | 50% | ---- | 50% | --- |
| Fat² | ---- | 50% | ---- | 50% |

| | | | | |
|---|---|---|---|---|
| ¹Resin glycerol ester of wood rosin (RS-5). ²Hydrogenated cottonseed oil having a melting point of 70 °C. | | | | |

Master Batch Gum Base composition AA was prepared by masticating butyl rubber with resin while Master Batch Gum Base composition BB was prepared by masticating butyl rubber with a fat. Moreover, Master Batch Gum Base CC composition was prepared by masticating styrene butadiene rubber with resin, while Master Batch Gum Base DD composition was prepared by masticating styrene butadiene with fat. Although a master batch process was used to make the gum base, other processes such as a one-step, continuous kettle process or continuous extrusion process may be used.

The glass transitions of each of the samples are set forth in Table 9 below. Moreover, the melt endotherms for each of the samples are set forth in Table 10 below:

**TABLE 9**

| **Sample** | **Glass Transitions (Tg)** |
|---|---|
| butyl rubber (BR) | -66 °C |
| styrene butadiene rubber (SBR) | -30°C |
| Comparative Master Batch Gum Base Composition AA | -61°C, 33°C |
| Inventive Master Batch Gum Base Composition BB | -66°C |
| Comparative Master Batch Gum Base Composition CC | -5 °C |
| Inventive Master Batch Gum Base Composition DD | -29 °C |

**TABLE 10**

| **Sample** | **Melt Endotherms** |
|---|---|
| butyl rubber | - |
| styrene butadiene rubber | - |
| Comparative Gum Base AA | -- |
| Inventive Gum Base BB | 62°C |
| Comparative Gum Base CC | - |
| Inventive Gum Base DD | 62°C |

As is apparent from Table 9, the Tg of the Master Batch Composition BB gum base containing butyl rubber masticated with fat was the same as the Tg of the sample containing only butyl rubber. Moreover, as is further apparent from Table 9 above, the Tg of the gum base Master Batch DD containing styrene butadiene rubber masticated with fat was only one degree different (greater) than the Tg of SBR rubber alone. Accordingly, the Tg of the Master Batch gum base compositions BB and DD did not change or substantially change upon mastication with a fat as compared to the elastomer alone. In contrast, as is further apparent from the AA and CC compositions in Table 9 above, mastication with a resin, i.e., a solvent plasticizer traditionally used for rubber mastication, increased the Tg of butyl rubber by at least five degrees (5 °)C and increased the Tg of styrene butadiene styrene rubber by at least twenty five degrees (25 °)C.

Furthermore, each of the Master Batch gum base samples BB and DD contained crystalline fat in a separate phase, as each of those samples exhibited a melt endotherm at 62 °C. Accordingly, Master Batch gum bases BB and DD contain domains of crystalline fat.

### EXAMPLE 8

**TABLE 11**

| **INVENTIVE GUM BASE COMPOSITIONS** | | |
|---|---|---|
| Component | % Weight | % Weight |
| | | |
| Polyvinyl acetate (Vinnapass B-30) | 40% | 28% |
| Polyvinyl acetate laurate (Vinnapass B 500/20 VL) | -- | 13.5% |
| Polyisobutylene (Oppanol B 50 SF) | 10% | 6.5% |
| Hydrogenated cottonseed oil (melting point 70 °C) | 10% | 6.5% |
| Hydrogenated cottonseed oil (melting point 45 °C | 9.44% | 25% |
| Triacetin | 6.56% | 4.4% |
| Glycerol monostearate | 4% | 2.6% |
| Talc | 20% | 13.5% |

### Street Test

Gum base was prepared using the above compositions and incorporated into the chewing gum composition of Table 7 to make chewing gum products. The resultant chewing gums were chewed for 30 minutes and the cuds were deposited on an asphalt parking lot. The cuds were further imbedded in the asphalt by a weighted object for about ten (10) seconds. Simultaneously commercially distributed gums (Freedent and Orbit from Wrigley's and Mintaburst from Cadbury Adams) were deposited and imbedded in the asphalt next to the inventive formulations in a similar fashion. After 24 hours more than 50 % of the inventive cuds were removed by pedestrian and automobile traffic. The remaining inventive cuds could easily be completely removed without leaving residue by scraping them with a spatula. Attempts to remove the cuds of the commercial gums required substantially more effort and resulted only in partial removal of the cud, i.e., the residues constituted about 10 to 30% of the original weight of the gum product and covered the original area of the cud.

### EXAMPLE 9

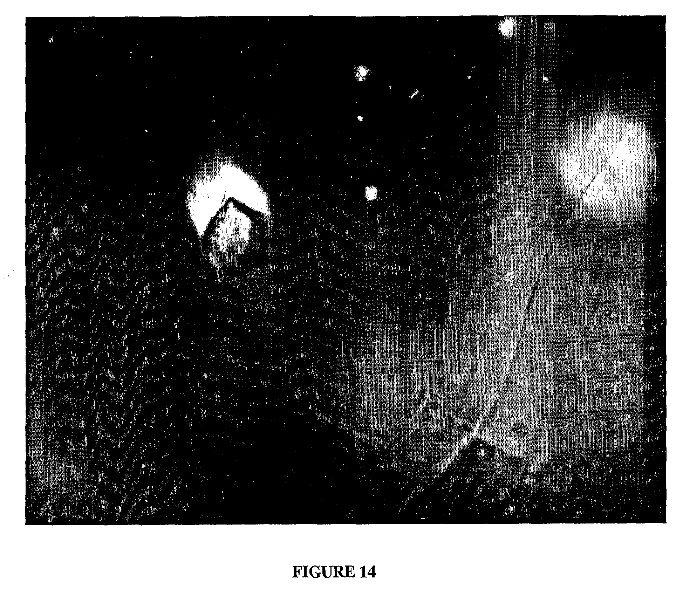

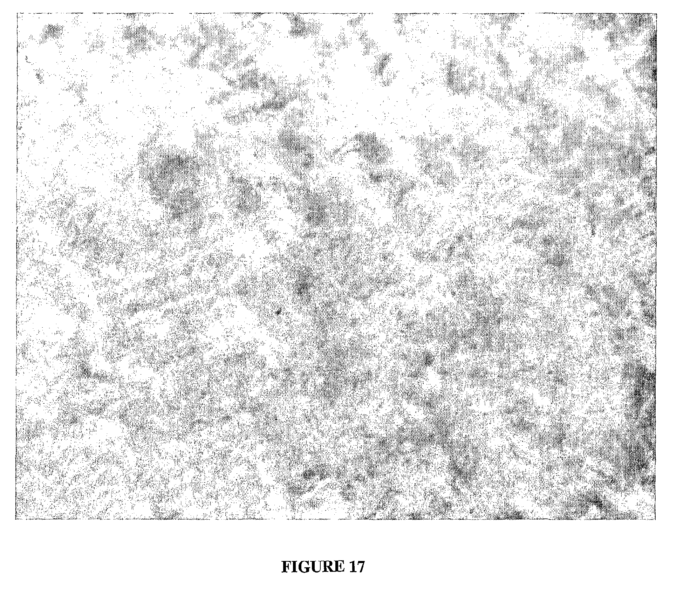

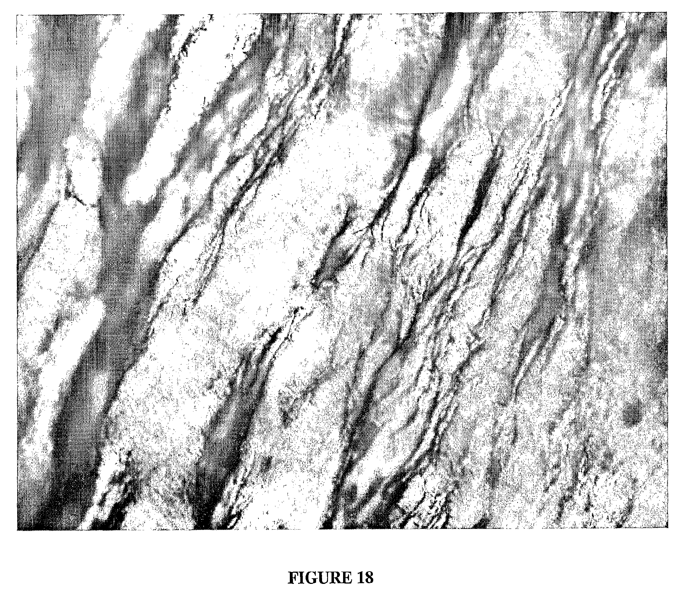

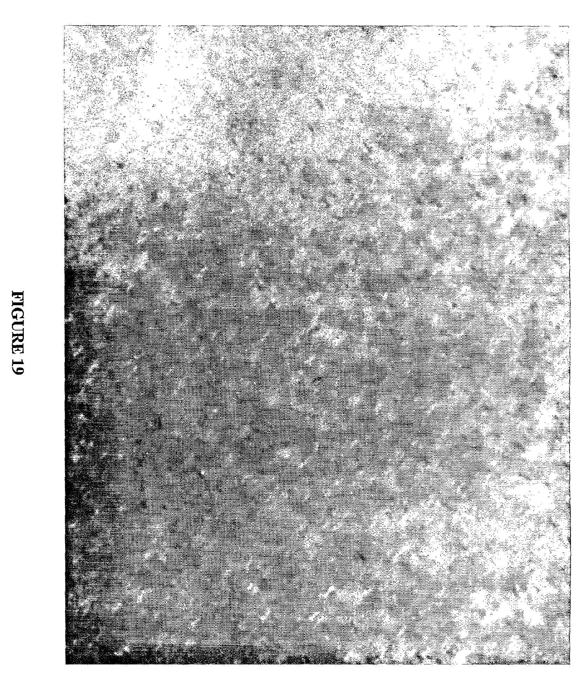

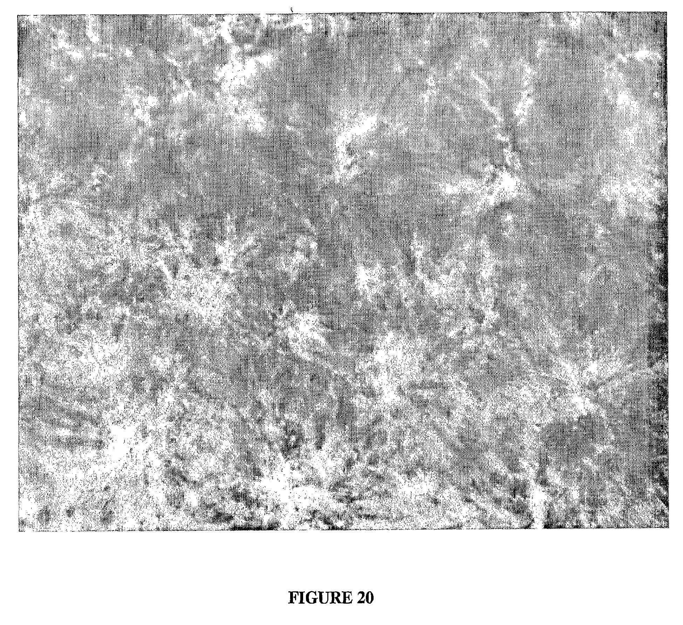

This example demonstrates embodiments which contain distinct domains. Master Batch Gum base (i.e., masticated elastomer) samples EE-KK having the formulations set forth in Table 12 below were prepared by in accordance with the methods discussed herein. Gum base master batch Samples GG-KK are examples of embodiments which contain at least one non-stick inducing component which is a fat or oil having more than twelve carbon atoms. All of the samples were subjected to photomicroscopy using polarized light and the crystal or domain formulations were clearly present. Photomicrographs of each of samples EE-KK are shown in FIGS. 14-20.

**TABLE 12**

| **GUM BASE COMPOSITIONS** | | | | | | | |
|---|---|---|---|---|---|---|---|
| **Component** | **% by weight** | | | | | | |
| | **EE** | **FF** | **GG** | **HH** | **II** | **JJ** | **KK** |
| butyl rubber | 50 | 50 | 41.6 | -- | 0 | 50 | 50 |
| polyisobutilene | 0 | 0 | 0 | 41.6 | 0 | 0 | 0 |
| styrene butadiene rubber | 0 | 0 | 0 | | 41.6 | 0 | 0 |
| resin | 50 | 0 | 0 | -- | 0 | 0 | 0 |
| medium chain triglyercides (MCTs)¹ | 0 | 50 | 0 | -- | 0 | 0 | 0 |
| "Non-Stick Inducing Component"² | 0 | 0 | 41.6 | 41.6 | 41.6 | 50 | 0 |
| oil containing more than 12 carbon atoms³ | 0 | 0 | 0 | 0 | 0 | 0 | 50 |
| GMS | 0 | -- | 16.8 | 16.8 | 16.8 | 0 | 0 |
| Total | 100 | 100 | 100 | 100 | 100 | 100 | 100 |

| | | | | | | | |
|---|---|---|---|---|---|---|---|
| ¹Triglycerides containing no more than twelve carbon atoms. ²Hydrogenated cottonseed oil (m.p. 70°C) ³Palm kernel oil. | | | | | | | |

By way of background, when polarized light passes through a liquid or other uniform phase, a photograph of the liquid or other uniform phase will appear dark as there is no birefringence. However, when polarized light passes through a discontinuous phase containing a crystalline or other structure in a separate phase, a photograph of the discontinuous phase will appear as a bright image as a result of birefringence of the crystalline or other structure in a separate phase, i.e., as a result of the crystalline or other structure in the separate phase being illuminated by polarized light.

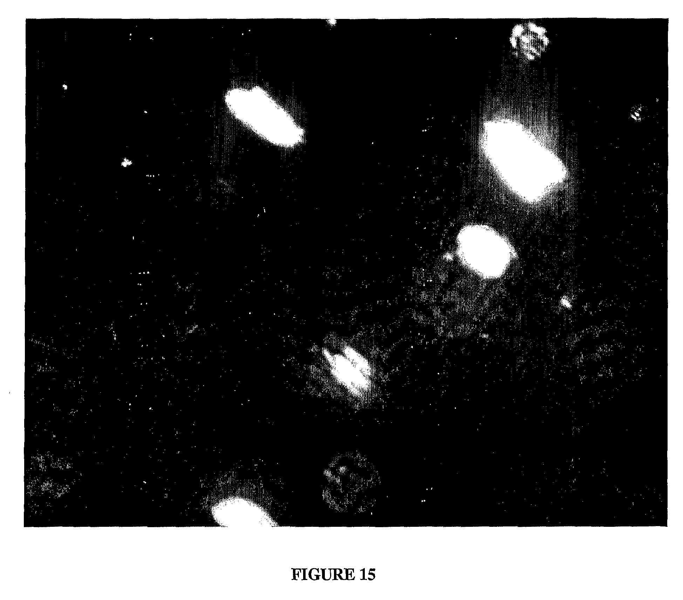

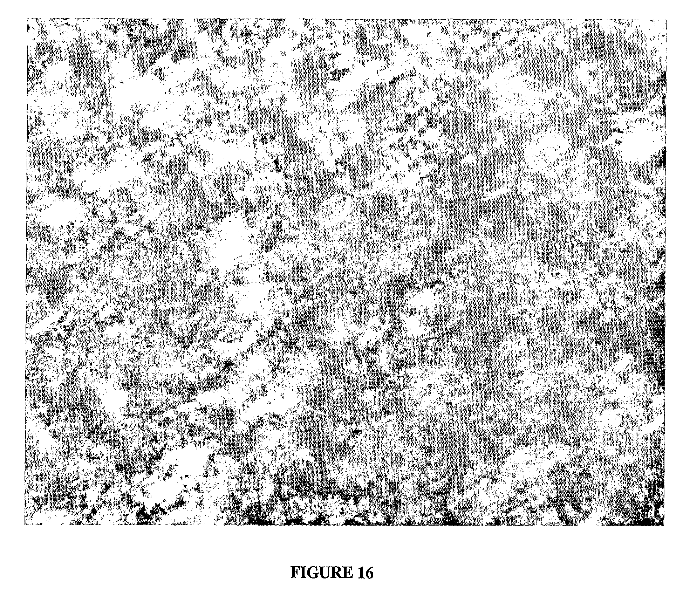

As is apparent from FIGS. 14 and15 the Master Batch gum base compositions not containing a non-stick inducing component of the present invention (i.e., gum bases EE and FF) were dark, indicating that the absence of a discontinuous phase. It should be noted that due to the presence of air bubbles, there are a few large bright spots. These are not attributable to the presence of separate domains, but are due to the refraction of light off the bubble. However, as is apparent from FIGS.16-20, the photographs of the gum base Master Batch compositions containing at least one non-stick inducing component (i.e., gum base Master Batches GG-KK) all show overall lighter images (light in color), indicating the presence of a discontinuous phase and evidencing crystallization of the non-stick inducing component (i.e. the fat or oil containing more than 12 carbon atoms) to form domains.

### EXAMPLE 10

### Gum Base Compositions Incorporating Low Amounts of Conventional

### Elastomer Solvents

The following gum base compositions were prepared. These compositions included a combination of the non-stick inducing components with conventional elastomer solvents (5%). These gum base compositions were incorporated into the chewing gum composition of Table 7. The chewing gums formed therefrom maintained reduced stickiness and non-stick properties even in the presence of a small amount of elastomer solvent.

**TABLE 13**

| **INVENTIVE GUM BASE COMPOSITIONS** | | |
|---|---|---|
| Component | Weight % | |
| | | |
| Polyvinyl acetate | 38 | 40.00 |
| Polyisobutylene | 9.5 | 10.00 |
| Glycerol monostearate | 3.8 | 4.00 |
| High melting fat (melting point 70°C) | 9.5 | 10.00 |
| Low melting fat (melting point 45°C) | 8.97 | 4.44 |
| Triacetin | 6.23 | 6.56 |
| Talc | 19.00 | 20.00 |
| Glycerol ester of resin (elastomer solvent)¹ | 5.00 | 5.00 |

| | | |
|---|---|---|
| ¹ Available from Hercules Corp. | | |

### EXAMPLE 11

A study was conducted to measure the molecular changes occurring in chewing gum when exposed to sunlight with and without the presence of photosensitizer. The molecular structure of the polymers (elastomers) is related to their physical properties. The adhesion is strongly affected by the molecular weight of the polymer. For instance, chewing gum compositions frequently use polysibutylene (PIB). When all other conditions are the same, the molecular mass of the polymer widely determines the adhesiveness of the polymer. Low molecular weight PIB adheres to most surfaces and poses a problem of handling the material because of its stickiness. On the other hand, high molecular weight PIB has been discovered to be not adhesive and exhibits a very weak tendency to cold flow. The adhesiveness of the polymers may be defined by their ability to form weak bonds with the adjacent surfaces. In order to form these weak bonds, the polymer has to come in close proximity to the adjacent surface. This may be achieved faster and easier by smaller molecules than the larger molecules. It has been discovered that a polymer of the same chemical composition may generally adhere more if it has relatively lower molecular weight.

Light may induce changes in the elastomer polymers such as crosslinking, degradation and oxidation. This process occurs in the materials when exposed to the environment. However, the rate at which the photo-induced reactions are occurring is slow to have noticeable impact on the physical properties of the polymers. It has been discovered that photosensitizers such as chlorophyll, when added to compositions containing elastomers accelerate the photo-induced reactions significantly.

Gum base compositions were made with three different types of elastomer, namely polyisbutylene (PIB), butyl rubber (BR), and styrene butadiene rubber (SBR). Each type of gum base composition (PIB, BR and SBR) was divided into two samples; to the first sample 0.1% chlorophyll was added as a photosensitizer. The other was left as a control sample. These gum base compositions are set forth in Table 14 below.

**TABLE 14**

| **GUM BASE COMPOSITIONS** | | | | | | |
|---|---|---|---|---|---|---|
| TComponent | LL | MM | NN | OO | PP | QQ |
| Polyvinylacetate | 40.0 | 40.0 | 40.0 | 39.96 | 40.0 | 40.0 |
| Polyisobutylene | 10.0 | - | - | 9.99 | - | - |
| Butyl Rubber | - | 10.0 | - | - | 9.99 | - |
| Styrene Butadiene Rubber | - | - | 10.0 | - | - | 9.99 |
| Hydrogenated Cottonseed Oil (melting point 70°C) | 10.0 | 10.0 | 10.0 | 9.99 | 9.99 | 9.99 |
| Hydrogenated Cottonseed Oil (melting point 45°C) | 9.44 | 9.44 | 9.44 | 9.43 | 9.43 | 9.43 |
| Triacetin | 6.56 | 6.56 | 6.56 | 6.55 | 6.55 | 6.55 |
| Glycerol Monostearate | 4.0 | 4.0 | 4.0 | 4.0 | 4.0 | 4.0 |
| Filler | 20.0 | 20.0 | 20.0 | 19.98 | 19.98 | 19.98 |
| Chlorophyll | - | - | - | 0.1 | 0.1 | 0.1 |

Each gum base was then incorporated into chewing gum compositions as shown in Table 15 below.

**TABLE 15**

| **CHEWING GUM COMPOSITIONS** | | | | | | |
|---|---|---|---|---|---|---|
| Component | RR | SS | TT | UU | VV | WW |
| Gum Base LL | 30 | - | - | - | - | - |
| Gum Base MM | - | 30 | - | - | - | - |
| Gum Base NN | - | - | 30 | - | - | - |
| Gum Base OO | - | - | - | 30 | - | - |
| Gum Base PP | - | - | - | - | 30 | - |
| Gum Base QQ | - | - | - | - | - | 30 |
| Sorbitol | 49.3 | 49.3 | 49.3 | 49.3 | 49.3 | 49.3 |
| Maltitol | 10.4 | 10.4 | 10.4 | 10.4 | 10.4 | 10.4 |
| Glycerin | 3.0 | 3.0 | 3.0 | 3.0 | 3.0 | 3.0 |
| Acesulfame K | 0.1 | 0.1 | 0.1 | 0.1 | 0.1 | 0.1 |
| Aspartame | 0.2 | 0.2 | 0.2 | 0.2 | 0.2 | 0.2 |
| Peppermint Flavor | 2.0 | 2.0 | 2.0 | 2.0 | 2.0 | 2.0 |
| Calcium Carbonate | 5.0 | 5.0 | 5.0 | 5.0 | 5.0 | 5.0 |

### Results

The samples of BR and PIB without chlorophyll were easier to remove and left fewer residues than the samples of SBR without chlorophyll. The addition of chlorophyll hindered the removal of the PIB-containing samples, but improved the removal of the BR and SBR samples.

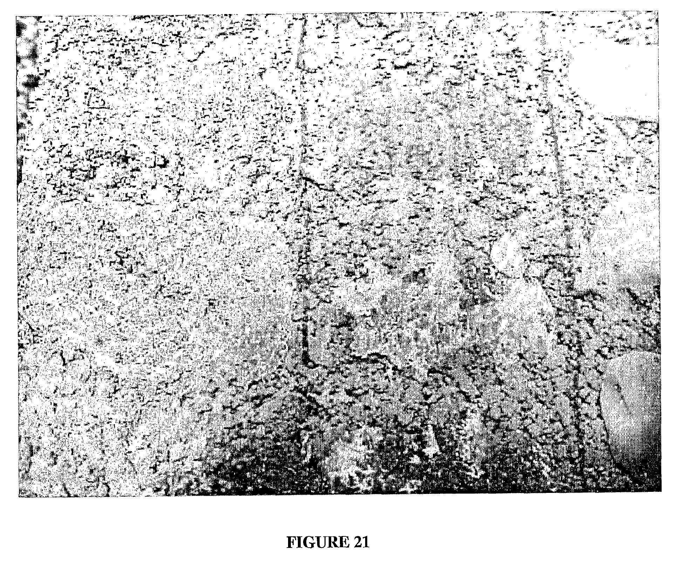

Samples were then tested for molecular weight changes to the polymers. The results are shown in Tables 16-17 below. Additionally, FIGS. 21-23 show the results of adhesion tests on brick surfaces for the BR, PIB and SBR containing samples. The tests were conducted as previously discussed.

Figure 21 shows the sample cuds of chewing gum made using PIB. The left side of the Figure shows gum containing chlorophyll. The right side of the Figure does not contain chlorophyll (control). As is apparent, both sides showed substantial removal from the brick, with minor residue.

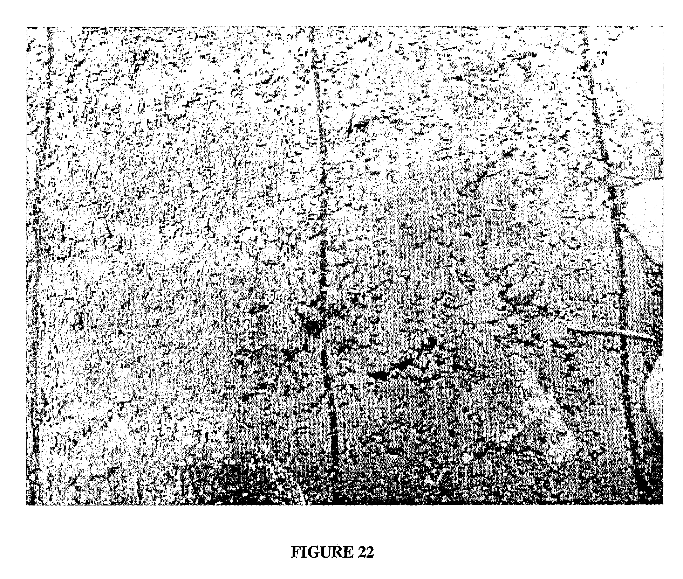

Figure 22 shows the sample cuds of chewing gum made using BR gum. The left side of this Figure contains chlorophyll and the right side of the Figure is the control with no chlorophyll. As is apparent, both sides showed substantial removal from the brick, with minor residue.

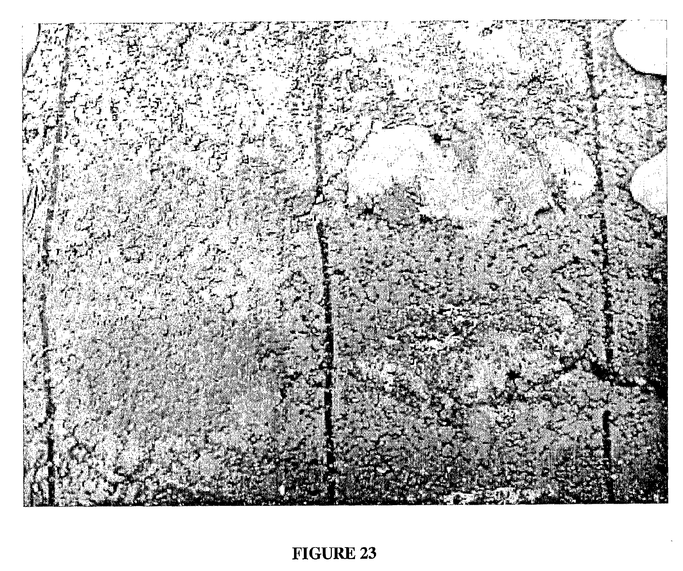

Figure 23 shows the sample cuds of chewing gum made using SBR. The left side contains chlorophyll and the right side is the control with no chlorophyll. As is apparent, the left side which contained chlorophyll showed substantially less residue than the right side without chlorophyll.

The sample containing PIB had a slight increase in both molecular weight and molecular number of PVAc when chlorophyll was added. There was another compound detected with solubility similar to PVAc. The PIB sample containing chlorophyll had reduced average molecular weight and lower molecular weight number after exposure to sunlight.

**TABLE 16**

| **MOLECULAR WEIGHT OF PIB CHEWING GUMS** | | | |
|---|---|---|---|
| Composition | | Average Molecular Weight (Mw), Daltons | Molecular Weight Number (Mn), Daltons |
| RR (PIB without chlorophyll) | Poly (vinyl acetate) | 1.282x10⁶ | 1.281x10⁶ |
| | Poly (isobutylene) | 1.803x10⁸ | 1.452x10⁸ |
| UU (PIB with chlorophyll) | Poly (vinyl acetate) | 8.440x10⁶ | 3.076x10⁶ |
| | Unknown peak | 9.334x10⁶ | 5.499x10⁶ |
| | Poly (isobutylene) | 1.000x10⁸ | 4.578x10⁶ |

Subsequent to exposure to sunlight, BR samples had a decrease in the average molecular weight and molecular weight number of the PVAc when chlorophyll was added. The chlorophyll had the opposite effect on the BR fraction, i.e. both molecular weight average and molecular number increased. The increase in the molecular number was more pronounced than the increase in the molecular number.

**TABLE 17**

| **MOLECULAR WEIGHT OF BR CHEWING GUMS** | | | |
|---|---|---|---|
| Composition | | Average Molecular Weight (Mw), Daltons | Molecular Weight Number (Mn), Daltons |
| SS (BR without chlorophyll) | Poly (vinyl acetate) | 1.449x107 | 1.066x10⁷ |
| | Butyl rubber | 1.658x10⁸ | 3.815x10⁶ |
| VV | Poly (vinyl acetate) | 6.811x10⁶ | 6.015x10⁵ |
| | Unknown peak | 4.699x10⁷ | 5.653x10⁶ |
| | Butyl rubber | 6.252x10⁸ | 1.447x10⁸ |

Subsequent to exposure to sunlight, the SBR samples showed similar trend as the BR samples. There was decrease in the average molecular weight of the PVAc when chlorophyll was added. The molecular number of the PVA was higher when chlorophyll was added. Both the molecular weight average and the molecular number of the SBR increased.

**TABLE 18**

| **MOLECULAR WEIGHT OF SBR CHEWING GUMS** | | | |
|---|---|---|---|
| Composition | | Average Molecular Weight (Mw), Daltons | Molecular Weight Number (Mn), Daltons |
| TT (SBR without chlorophyll) | Poly (vinyl acetate) | 1.4400x10⁷ | 9.327x10⁵ |
| | Styrene butadiene rubber | 2.680x10⁶ | 2.278x10⁶ |
| WW(SBR with chlorophyll) | Poly (vinyl acetate) | 6.011x10⁶ | 1.642x10⁶ |
| | Unknown peak | 5.320x10⁷ | 3.715x10⁶ |
| | Styrene butadiene rubber | 5.683x10⁶ | 5.741x10⁷ |

Free radicals generated by the chlorophyll may act in a different way depending on the system they are in. They may cause several reactions in the polymers, such as crosslinking, degradation and oxidation depending on the structure of the compounds they encounter. The level of the oxidation was not measured in this study, only crosslinking and degradation as witnessed by changes in the molecular weight was measured. The changes in the poly (vinyl acetate) (PVAc) were not expected to have significant impact on the gum stickiness. However, the changes in the molecular weight of the rubbers proved to have significant impact on the stickiness of the samples.

Subsequent to exposure to sunlight, the PIB containing sample had slight increase in both molecular weight and molecular number of PVAc when chlorophyll was added, suggesting that the PVAc crossinked either with itself or with the PIB. The compound detected with solubility similar to PVAc may be this reaction product. The PIB had reduced average molecular weight and lower molecular weight number. This is consistent with reactions of degradation. One high molecular weight polymer molecule gives rise to several molecules with much lower molecular weight upon degradation. Low molecular weight PIB was quite sticky. The decrease in the molecular weight of the PIB resulted in the increase in the stickiness of the PIB samples.

The higher increase in the molecular weight number as compared to increase in the average molecular weight of the BR samples could be explained by the lower amounts of low molecular weight polymer fraction as a result of crosslinking. Low molecular weight rubber was a bigger contributor to stickiness due to its higher mobility. The reduction in the lower molecular weight fraction and the increase of the average molecular weight of the rubber is believed to explain the observed reduction of gum stickiness.

Subsequent to exposure to sunlight, the SBR samples showed a large increase in both the molecular weight number and the average molecular weight. This is believed to explain the largest decrease in the stickiness observed physically when chlorophyll was added.

As seen from the above results, the chlorophyll addition reduced the adhesion of compositions containing unsaturated rubbers (BR and SBR) after exposure to sunlight. This observation was confirmed by the increase in both the molecular weight and the molecular number of these rubbers.

While there have been described what are presently believed to be the preferred embodiments of the invention, those spilled in the art will realize that changes and modifications may be made thereto and it is intended to include all such changes and modifications as fall within the true scope of the invention.

## Claims

1. A chewing gum base composition comprising:
(i) at least one elastomer having a glass transition temperature prior to processing into a substantially homogenous mass; and
(ii) at least one non-stick inducing component which softens and permits processing of the elastomer into a substantially homogenous mass,
wherein the non-stick inducing component maintains the glass transition temperature of the elastomer within a three degree range upon admixture with the elastomer;
wherein the non-stick inducing component is present in an amount of 30% to 40% by weight of the chewing gum base composition;
wherein the elastomer has an average molecular weight of at least 200,000;
wherein the non-stick inducing component comprises a fat, including natural fats or animal fats, or
wherein the non-stick inducing component is selected from fatty acids; monoglycerides, diglycerides, and triglycerides of fatty acids; esters of monoglycerides and diglycerides; glycerol esters of fatty acids; fatty esters of sugars; esters of alcohols; phospholipids and combinations thereof;
wherein the non-stick inducing component has a property selected from having a hydrophilic portion and hydrophobic portion; an HLB of about 3.5 to about 13; and a melting point of about 10°C to about 75°C.; and
wherein the at least one non-stick inducing component comprises a first non-stick inducing component having a melting point of 60°C to 70°C and a second non-stick inducing component having a melting point of 20°C to 40°C.

2. The composition of claim 1, wherein the non-stick inducing component is selected from C14-C20 fatty acids; mono-, di- and triglycerides of C14-24 fatty acids; C14-24 natural fats; C1-4 stearates; and combinations thereof.

3. The composition of claim 1 or claim 2, wherein the non-stick inducing component is selected from stearic acid, oleic acid, palmitic acid, linoleic acid, arachidonic acid, myristic acid, palmitoleic acid, vaccenic acid, olive oil, grape seed oil, peanut oil, sunflower oil, safflower oil, palm oil, cocoa butter, coconut oil, palm kernel oil, acetylated mono- and diglycerides, glycerol monostearate, beef tallow oil, lard, butter fat, chicken fat, methyl stearate, ethyl stearate, lecithin, lanolin and combinations thereof.

4. The composition of any preceding claim, wherein the ratio of non-stick inducing component to elastomer is 1:1 to 10:1.

5. The composition of any preceding claim, wherein the non-stick inducing component is present in amounts of 10% to 60% by weight of the gum base composition.

6. The composition of any preceding claim, wherein the elastomer is present in an amount of 1% to 30% by weight of the gum base composition.

7. The composition of any preceding claim, comprising a maximum of about 5% of a material selected from waxes, resins, elastomer solvents, and combinations thereof.

8. The composition of claim 7, wherein the composition is free of added materials selected from waxes, resins, elastomer solvents, and combinations thereof.

9. The composition of any of claims 1-7, wherein the composition comprises from 1% by weight to 5% by weight of a resin.

10. The composition of any preceding claim, further including a vinyl polymer.

11. The composition of claim 10, further including a material selected from polyvinyl acetate, polyvinyl laurate acetate, polyvinyl alcohol or a mixture thereof.

12. The composition of any preceding claim, wherein the elastomer is selected from polyisobutylene, butyl rubber, butadiene-styrene rubber and combinations thereof.

13. The composition of any preceding claim, further comprising domains within the elastomer, wherein the domains comprise at least one non-stick inducing component.

14. The composition of claim 13, further including one or more sensate components.

15. A chewing gum composition comprising:
(i) a chewing gum base composition according to any preceding claim; and
(ii) at least one of a flavor and a sweetener.

16. A method of making a chewing gum composition having reduced-stick properties comprising:
(a) providing a chewing gum base composition according to any preceding claim; and
(b) combining said gum base with at least one component selected from sweeteners, flavours and combinations thereof.

17. The method of claim 16 wherein there is at least one sweetener and at least one flavour.

## Patentansprüche

1. Kaugummigrundzusammensetzung, umfassend:
(i) wenigstens ein Elastomer, das vor Verarbeitung zu einer im Wesentlichen homogenen Masse eine Glasübergangstemperatur aufweist; und
(ii) wenigstens eine Antihafteigenschaften induzierende Komponente, die das Elastomer weichmacht und seine Verarbeitung zu einer im Wesentlichen homogenen Masse zulässt,
wobei die Antihafteigenschaften induzierende Komponente die Glasübergangstemperatur des Elastomers bei Mischung mit dem Elastomer innerhalb eines Bereichs von drei Grad hält;
wobei die Antihafteigenschaften induzierende Komponente in einer Menge von 30 Gew.-% bis 40 Gew.-% der Kaugummigrundzusammensetzung vorhanden ist;
wobei das Elastomer ein mittleres Molekulargewicht von wenigstens 200.000 aufweist;
wobei die Antihafteigenschaften induzierende Komponente ein Fett, das natürliche Fette oder tierische Fette enthält, umfasst, oder
wobei die Antihafteigenschaften induzierende Komponente aus Fettsäuren, Monoglyceriden, Diglyceriden und Triglyceriden von Fettsäuren; Estern von Monoglyceriden und Diglyceriden; Glycerinestern von Fettsäuren; Fettestern von Zuckern; Estern von Alkoholen; Phospholipiden und Kombinationen davon ausgewählt ist;
wobei die Antihafteigenschaften induzierende Komponente eine Eigenschaft aufweist, die darunter ausgewählt ist, dass sie einen hydrophilen Anteil und einen hydrophoben Anteil; ein HLB von etwa 3,5 bis etwa 13; und einen Schmelzpunkt von etwa 10°C bis etwa 75°C aufweist; und
wobei die wenigstens eine Antihafteigenschaften induzierende Komponente eine erste Antihafteigenschaften induzierende Komponente mit einem Schmelzpunkt von 60°C bis 70°C und eine zweite Antihafteigenschaften induzierende Komponente mit einem Schmelzpunkt von 20°C bis 40°C umfasst.

2. Zusammensetzung nach Anspruch 1, wobei die Antihafteigenschaften induzierende Komponente aus C14-C20-Fettsäuren; Mono-, Di- und Triglyceriden von C14-24-Fettsäuren; natürlichen C14-24-Fetten; C1-4-Stearaten; und Kombinationen davon ausgewählt ist.

3. Zusammensetzung nach Anspruch 1 oder Anspruch 2, wobei die Antihafteigenschaften induzierende Komponente aus Stearinsäure, Ölsäure, Palmitinsäure, Linolsäure, Arachidonsäure, Myristinsäure, Palmitoleinsäure, Vaccensäure, Olivenöl, Weintraubenkernöl, Erdnussöl, Sonnenblumenöl, Distelöl, Palmöl, Kakaobutter, Kokosnussöl, Palmkernöl, acetylierten Mono- und Diglyceriden, Glycerinmonostearat, Rindertalgöl, Schweinefett, Butterfett, Hühnerfett, Methylstearat, Ethylstearat, Lecithin, Lanolin und Kombinationen davon ausgewählt ist.

4. Zusammensetzung nach einem vorhergehenden Anspruch, wobei das Verhältnis der Antihafteigenschaften induzierenden Komponente zu dem Elastomer 1:1 bis 10:1 ist.

5. Zusammensetzung nach einem vorhergehenden Anspruch, wobei die Antihafteigenschaften induzierende Komponente in Mengen von 10 Gew.-% bis 60 Gew.-% der Gummigrundzusammensetzung vorhanden ist.

6. Zusammensetzung nach einem vorhergehenden Anspruch, wobei das Elastomer in einer Menge von 1 Gew.-% bis 30 Gew.-% der Gummigrundzusammensetzung vorhanden ist.

7. Zusammensetzung nach einem vorhergehenden Anspruch, die maximal etwa 5 % eines Materials umfasst, das aus Wachsen, Harzen, Elastomerlösungsmitteln und Kombinationen davon ausgewählt ist.

8. Zusammensetzung nach Anspruch 7, wobei die Zusammensetzung frei von aus Wachsen, Harzen, Elastomerlösungsmitteln und Kombinationen davon ausgewählten Zusatzmaterialien ist.

9. Zusammensetzung nach einem der Ansprüche 1-7, wobei die Zusammensetzung von 1 Gew.-% bis 5 Gew.-% eines Harzes umfasst.

10. Zusammensetzung nach einem vorhergehenden Anspruch, die ferner ein Vinylpolymer enthält.

11. Zusammensetzung nach Anspruch 10, die ferner ein Material enthält, das aus Polyvinylacetat, Vinyllaurat/Vinylacetat Copolymer, Polyvinylalkohol oder einem Gemisch davon ausgewählt ist.

12. Zusammensetzung nach einem vorhergehenden Anspruch, wobei das Elastomer aus Polyisobuten, Butylkautschuk, Styrol-Butadien-Kautschuk und Kombinationen davon ausgewählt ist.

13. Zusammensetzung nach einem vorhergehenden Anspruch, die ferner innerhalb des Elastomers Domänen umfasst, wobei die Domänen wenigstens eine Antihafteigenschaften induzierende Komponente umfassen.

14. Zusammensetzung nach Anspruch 13, die ferner eine oder mehrere Sensatkomponenten enthält.

15. Kaugummizusammensetzung, umfassend:
(i) eine Kaugummigrundzusammensetzung nach einem vorhergehenden Anspruch; und
(ii) einen Aromastoff und/oder ein Süßungsmittel.

16. Verfahren zur Herstellung einer Kaugummizusammensetzung, die Haftminderungseigenschaften aufweist, wobei das Verfahren umfasst:
(a) Bereitstellen einer Kaugummigrundzusammensetzung nach einem vorhergehenden Anspruch; und
(b) Kombinieren des Gummigrundstoffs mit wenigstens einer Komponente, die aus Süßungsmitteln, Aromastoffen und Kombinationen davon ausgewählt ist.

17. Verfahren nach Anspruch 16, wobei wenigstens ein Süßungsmittel und wenigstens ein Aromastoff vorhanden sind.

## Revendications

1. Composition de base de gomme à mâcher, comprenant :
(i) au moins un élastomère ayant un point de transition à l'état vitreux avant transformation en une masse sensiblement homogène et
(ii) au moins un constituant induisant de la non-adhérence, qui ramollit l'élastomère et en permet la transformation en une masse sensiblement homogène,
dans laquelle le constituant induisant de la non-adhérence maintient le point de transition à l'état vitreux de l'élastomère dans une plage de trois degrés après mélange à l'élastomère ;
dans laquelle le constituant induisant de la non-adhérence représente de 30% à 40% du poids de la composition de base de gomme à mâcher ;
dans laquelle l'élastomère a un poids moléculaire moyen d'au moins 200 000 ;
dans laquelle le constituant induisant de la non-adhérence comprend une matière grasse incluant des matières grasses naturelles ou des matières grasses animales ou
dans laquelle le constituant induisant de la non-adhérence est choisi parmi des acides gras ; des monoglycérides, diglycérides et triglycérides d'acides gras ; des esters de monoglycérides et diglycérides ; des esters glycéroliques d'acides gras ; des esters gras de sucres ; des esters d'alcools ; des phospholipides et leurs combinaisons ;
dans laquelle le constituant induisant de la non-adhérence a une propriété choisie parmi le fait d'avoir une partie hydrophile et une partie hydrophobe ; une HLB d'environ 3,5 à environ 13 ; et un point de fusion d'environ 10°C à environ 75°C et
dans laquelle le au moins un constituant induisant de la non-adhérence comprend un premier constituant induisant de la non-adhérence et ayant un point de fusion de 60°C à 70°C et un deuxième constituant induisant de la non-adhérence et ayant un point de fusion de 20°C à 40°C.

2. Composition suivant la revendication 1, dans laquelle le constituant induisant de la non-adhérence est choisi parmi des acides gras en C14 à C20 ; des monoglycérides, diglycérides et triglycérides d'acides gras en C14 à C24 ; des matières grasses naturelles en C14 à C24 ; des stéarates en C1 à C4 et leurs combinaisons.

3. Composition suivant la revendication 1 ou la revendication 2, dans laquelle le constituant induisant de la non-adhérence est choisi parmi l'acide stéarique, l'acide oléique, l'acide palmitique, l'acide linoléique, l'acide arachidonique, l'acide myristique, l'acide palmitoléique, l'acide vaccénique, l'huile d'olive, l'huile de pépins de raisin, l'huile d'arachide, l'huile de tournesol, l'huile de carthame, l'huile de palme, le beurre de cacao, l'huile de coco, l'huile de palmiste, des monoglycérides acétylés et des diglycérides acétylés, le monostéarate de glycérol, l'huile de suif de boeuf, le saindoux, une matière grasse du lait, une matière grasse de poulet, le stéarate de méthyle, le stéarate d'éthyle, une lécithine, la lanoline et leurs combinaisons.

4. Composition suivant l'une quelconque des revendications précédentes, dans laquelle le rapport du constituant induisant de la non-adhérence à l'élastomère va de 1:1 à 10:1.

5. Composition suivant l'une quelconque des revendications précédentes, dans laquelle le constituant induisant de la non-adhérence représente de 10% à 60% du poids de la composition de base de gomme.

6. Composition suivant l'une quelconque des revendications précédentes, dans laquelle l'élastomère représente de 1% à 30% du poids de la composition de base de la gomme.

7. Composition suivant l'une quelconque des revendications précédentes, comprenant un maximum d'environ 5% d'une matière choisie parmi des cires, des résines, des solvants d'élastomère et leurs combinaisons.

8. Composition suivant la revendication 7, dans laquelle la composition est exempte de matières ajoutées choisies parmi des cires, des résines, des solvants d'élastomère et leurs combinaisons.

9. Composition suivant l'une quelconque des revendications 1 à 7, dans laquelle la composition comprend de 1% en poids à 5% en poids d'une résine.

10. Composition suivant l'une quelconque des revendications précédentes, comprenant, en outre, un polymère vinylique.

11. Composition suivant la revendication 10, comprenant, en outre, une matière choisie parmi le poly(acétate de vinyle), le poly(laurate acétate de vinyle), l'alcool polyvinylique ou l'un de leurs mélanges.

12. Composition suivant l'une quelconque des revendications précédentes, dans laquelle l'élastomère est choisi parmi le polyisobutylène, le caoutchouc butyle, le caoutchouc butadiène-styrène et leurs combinaisons.

13. Composition suivant l'une quelconque des revendications précédentes, comprenant, en outre, des domaines au sein de l'élastomère, les domaines comprenant au moins un constituant induisant de la non-adhérence.

14. Composition suivant la revendication 13, comprenant, en outre, un ou plusieurs constituants donnant une sensation.

15. Composition de gomme à mâcher, comprenant :
(i) une composition de base de gomme à mâcher suivant l'une quelconque des revendications précédentes et
(ii) au moins un aromatisant et un édulcorant.

16. Procédé pour faire une composition de gomme à mâcher ayant des propriétés d'adhérence réduites, dans lequel :
(a) on se procure une composition de base de gomme à mâcher suivant l'une quelconque des revendications précédentes et
(b) on combine cette base de gomme à au moins un constituant choisi parmi des édulcorants, des aromatisants et leurs combinaisons.

17. Procédé suivant la revendication 16, dans lequel il y a au moins un édulcorant et au moins un aromatisant.
